# EUROPEAN PATENT APPLICATION

(11) **EP 4 585 656 A1**
(43) Date of publication of application: **16.07.2025**
(21) Application number: 23862841.6
(22) Date of filing: 03.08.2023
(51) Int. Cl.: C09D 4/02, B32B 27/30, C08F 20/20, C08F 290/06, C08K 5/09, C08K 5/10, C08K 5/19, C08K 5/42, C08L 33/16, C09D 5/00, C09D 155/00

(54) **ACTIVE ENERGY RAY CURING-TYPE ANTIFOGGING COATING COMPOSITION, CURED MATERIAL, AND LAMINATE**

(30) Priority: 06.09.2022 JP 2022141292
(71) Applicant: DIC Corporation, Tokyo 174-8520 (JP)
(72) Inventor: OKA Kenichiro, Ichihara-shi, Chiba 290-8585 (JP); SHIMIZU Ikuma, Ichihara-shi, Chiba 290-8585 (JP); TAKADA Yasuhiro, Ichihara-shi, Chiba 290-8585 (JP); DEGUCHI Yoshinobu, Ichihara-shi, Chiba 290-8585 (JP)
(74) Representative: TBK
(86) International application number: PCT/JP2023/028358
(87) International publication number: WO 2024/053298

(57) **Abstract**

The present invention provides an active energy ray-curable antifogging coating composition capable of forming a cured film having long-lasting antifogging properties and excellent abrasion resistance, bleed resistance, adhesion, and damp heat resistance. The present invention also provides such a cured product and a laminate. The present invention relates to an active energy ray-curable antifogging coating composition including a radically polymerizable compound (A) having a structure of any of formulas (1) to (3) below, and a water-soluble surfactant (B); to a cured product of the active energy ray-curable antifogging coating composition; and to a laminate having a film including the cured product.

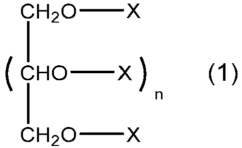

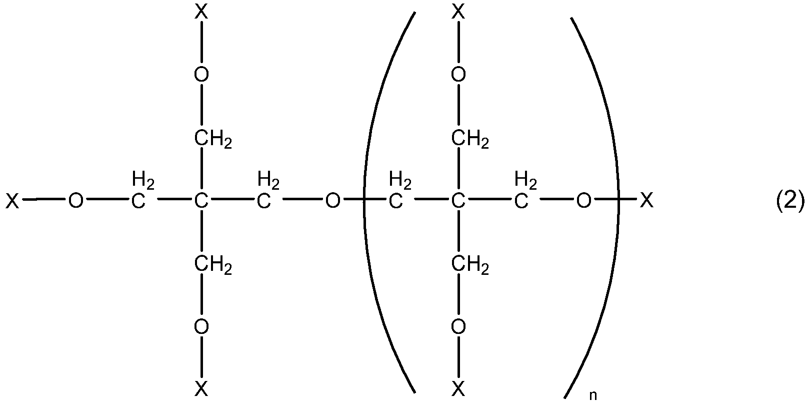

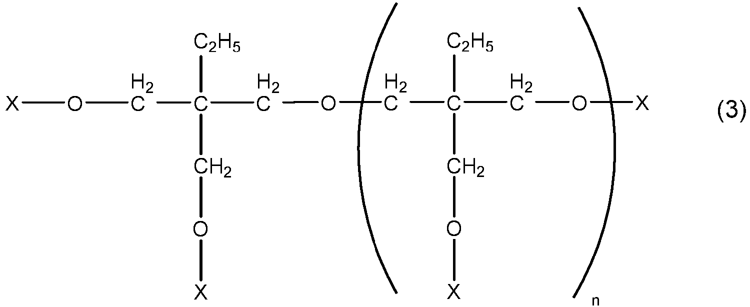

## Description

### Technical Field

The present invention relates to an active energy ray-curable antifogging coating composition, a cured product, and a laminate.

### Background Art

In recent years, automobile headlamps, virtual reality (VR) displays, etc. are required to have high antifogging properties that prevent fogging. Here, fogging is a phenomenon that occurs when light is diffusely reflected by water droplets sitting on the surface. Generally known antifogging methods for preventing such fogging include to reduce the contact angle of water, to absorb water that is attached to the surface, and to impart water repellency to the surface so that water will be repelled. Among these methods, reducing the contact angle of water is frequently used because it is simple and offers good antifogging performance.

An approach that is employed to reduce the contact angle of water is to apply an antifogging resin composition to the surface of a glass or plastic substrate to form an antifogging film. Conventional antifogging resin compositions are generally blends of a hydrophilic polymer and a surfactant. Examples thereof include compositions that are thermally cured by the use of, for example, a catalyst or an isocyanate, and active energy ray-curable compositions that include a compound having a polymerizable functional group and a polymerization initiator.

Unfortunately, the conventional antifogging resin compositions, after long use, show bleed-out of the surfactant and decrease their antifogging properties or are deteriorated in the appearance of films. Furthermore, the conventional compositions are also poor in abrasion resistance and in antifogging properties after repeated washing of the surface. Thus, there has been a need for a highly durable antifogging resin composition that can be used for a long term and can withstand washing that cleans the dirt.

Antifogging resin compositions with excellent antifogging properties, antifogging durability, and abrasion resistance are known. Specifically, such compositions are UV-curable antifogging compositions that are free from surfactants and include an ethoxylated bisphenol A di(meth)acrylate having an average number of moles of ethylene oxide in the range of 10 to 30, a hydrophilic monofunctional monomer, a polar diluting solvent, and a photopolymerization initiator (see, for example, Patent Literature 1).

Furthermore, Patent Literature 2 discloses a composition with excellent primary antifogging properties immediately after film preparation and excellent secondary antifogging properties after durability testing, such as water resistance test. This composition includes a hydroxyl group-containing (meth)acrylate compound having a specific epoxy equivalent, a specific amount of a nonionic antifogging agent, and an aqueous unsaturated group-containing miscibility enhancer.

### Citation List

### Patent Literature

PTL 1: Japanese Unexamined Patent Application Publication No. 2005-239832
PTL 2: Japanese Unexamined Patent Application Publication No. 2019-210396

### Summary of Invention

### Technical Problem

However, the inventions described in Patent Literatures 1 and 2 do not consider bleed resistance after a damp heat test. Thus, it cannot be concluded that the antifogging compositions to which the inventions described in Patent Literatures 1 and 2 pertain have sufficient durability.

The present invention has been made in view of the problems discussed above and provides an active energy ray-curable antifogging coating composition, a cured product, and a laminate that each offer or have long-lasting antifogging properties and are excellent in abrasion resistance, bleed resistance, adhesion, and damp heat resistance.

### Solution to Problem

After studies, the present inventors have found that an active energy ray-curable antifogging coating composition that includes a radically polymerizable compound (A) having a specific structure and a water-soluble surfactant (B) can solve the problems discussed above, thereby completing the present invention.

Specifically, the present invention provides the following inventive aspects.
[1] An active energy ray-curable antifogging coating composition including a radically polymerizable compound (A) having a structure of any of formulas (1) to (3) below, and a water-soluble surfactant (B), 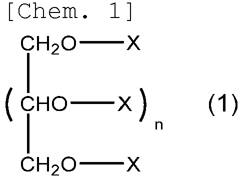 (in formula (1), n is an integer of 0 to 10; as many X as indicated by (2 + n) independently at each occurrence is an ethylene oxide-modified (meth)acryloyl group [CH₂=CR-CO(OC₂H₄)y- wherein R denotes a hydrogen atom or a methyl group and y indicates the number of ethylene oxide modification], a (meth)acryloyl group [CH₂=CR-CO- wherein R denotes a hydrogen atom or a methyl group], or a hydrogen atom; at least one X is an ethylene oxide-modified (meth)acryloyl group; and the average number of ethylene oxide modification per (meth)acryloyl group in the compound is 1 to 5), 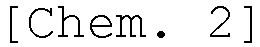 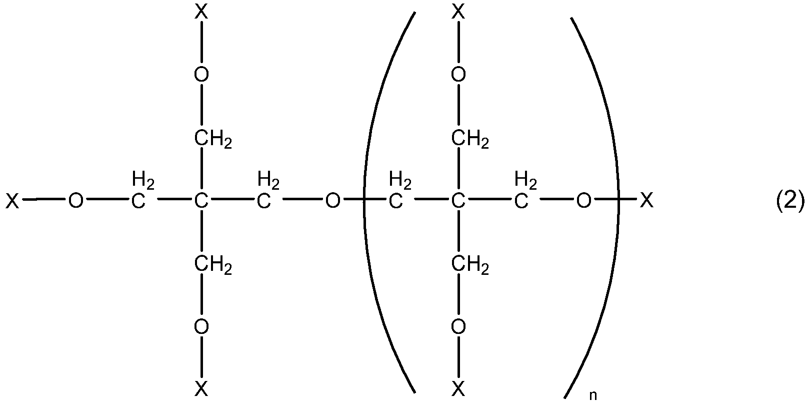 (in formula (2), n is an integer of 0 to 4; as many X as indicated by (4 + 2n) independently at each occurrence is an ethylene oxide-modified (meth)acryloyl group [CH₂=CR-CO(OC₂H₄)y- wherein R denotes a hydrogen atom or a methyl group and y indicates the number of ethylene oxide modification], a (meth)acryloyl group [CH₂=CR-CO- wherein R denotes a hydrogen atom or a methyl group], or a hydrogen atom; at least one X is an ethylene oxide-modified (meth)acryloyl group; and the average number of ethylene oxide modification per (meth)acryloyl group in the compound is 1 to 5), 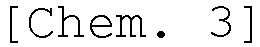 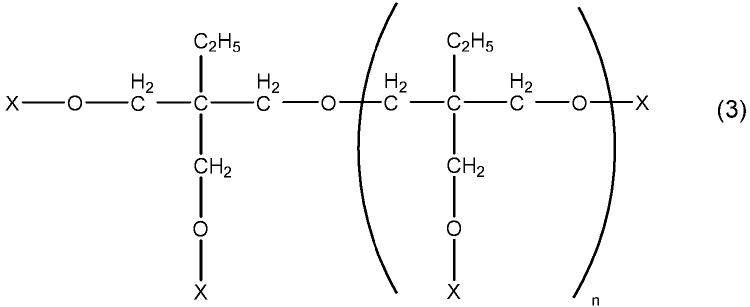 (in formula (3), n is an integer of 0 to 3; as many X as indicated by (3 + n) independently at each occurrence is an ethylene oxide-modified (meth)acryloyl group [CH₂=CR-CO(OC₂H₄)y- wherein R denotes a hydrogen atom or a methyl group and y indicates the number of ethylene oxide modification], a (meth)acryloyl group [CH2=CR-CO- wherein R denotes a hydrogen atom or a methyl group], or a hydrogen atom; at least one X is an ethylene oxide-modified (meth)acryloyl group; and the average number of ethylene oxide modification per (meth)acryloyl group in the compound is 1 to 5).
[2] The active energy ray-curable antifogging coating composition according to [1], further including a compound (C) having a carboxyl group and a (meth)acryloyl group, and a compound (D) having an alkoxylyl group and a (meth)acryloyl group.
[3] The active energy ray-curable antifogging coating composition according to [1] or [2], further including a polyfunctional (meth)acrylate (E) that is not modified by ethylene oxide.
[4] The active energy ray-curable antifogging coating composition according to any one of [1] to [3], which includes a polyfunctional (meth)acrylate (F) having a polyethylene glycol structure.
[5] A cured product obtained by irradiating the active energy ray-curable resin composition described in any one of [1] to [4] with an active energy ray.
[6] A laminate having a cured film including the cured product described in [5] on at least one side of a plastic substrate.
[7] A laminate having a cured film including the cured product described in [5] on at least one side of a glass substrate.

### Advantageous Effects of Invention

The active energy ray-curable antifogging coating composition of the present invention can form cured films and cured products that have long-lasting antifogging properties and excel in abrasion resistance, bleed resistance, adhesion, and damp heat resistance. The cured films can exhibit excellent antifogging properties while withstanding hot and humid environments and frequent contacts with people and objects. Thus, the active energy ray-curable antifogging coating composition of the present invention can be suitably used as an antifogging coating agent in, for example, automobile applications, display applications, and residential interiors.

### Description of Embodiments

In the present specification, a compound represented by formula (1) is written as the "compound (1)", and compounds represented by other formulas are also written in the similar manner. Furthermore, "acrylate" and "methacrylate" are collectively referred to as "(meth)acrylate," and "(meth)acryloyl" and "acryloyl" are collectively referred to as "(meth)acryloyl."

The radically polymerizable compound (A) is written as the "component (A)", and the other compounds (B) to (C) are also written in the similar manner.

### <Active energy ray-curable antifogging coating compositions>

An active energy ray-curable antifogging coating composition (hereinafter, also written simply as the "composition") of the present invention includes a radically polymerizable compound (A) and a water-soluble surfactant (B) as essential components.

By testing, the present invention has evaluated initial antifogging properties and cyclic antifogging properties of films obtained by curing the composition. Excellent test results will indicate that the composition has antifogging properties and antifogging durability. Furthermore, abrasion resistance, adhesion to a substrate before and after damp heat testing, and bleed resistance after damp heat testing were tested. Excellent test results will indicate that the composition excels in abrasion resistance, bleed resistance, adhesion, and damp heat resistance.

### [Radically polymerizable compounds (A)]

The radically polymerizable compound (A) is a compound that has a structure of any of formulas (1) to (3) described hereinabove. This component imparts antifogging properties to a cured film of the present invention.

A cured film of the composition exhibits higher abrasion resistance and bleed resistance with increasing number of (meth)acryloyl groups in the molecule of the compound as the component (A), and attains higher adhesion to a substrate, antifogging properties, and antifogging durability when the number of (meth)acryloyl groups in the molecule is small. From the point of view of the balance among abrasion resistance, bleed resistance, adhesion to substrates, antifogging properties, and antifogging durability of cured films, the number of (meth)acryloyl groups in the molecule is preferably in the range of 1 to 8, and more preferably in the range of 3 to 6.

In the compound as the component (A), the average number of ethylene oxide modification per (meth)acryloyl group (hereinafter, the "average number of EO modification") is in the range of 1 to 5, preferably in the range of 1 to 3, and particularly preferably in the range of 1 to 2. The smaller the average number of EO modification, the more a cured film is enhanced in abrasion resistance, bleed resistance, and adhesion to a substrate.

Specific examples of the compounds represented by formula (1) include ethoxylated glycerol tri(meth)acrylate and ethoxylated 1,2,3,4-butanetetrol tetra(meth)acrylate each having an average number of EO modification of 1 to 5.

Specific examples of the compounds represented by formula (2) include ethoxylated pentaerythritol tri(meth)acrylate, ethoxylated pentaerythritol tetra(meth)acrylate, ethoxylated dipentaerythritol penta(meth)acrylate, and ethoxylated dipentaerythritol hexa(meth)acrylate each having an average number of EO modification of 1 to 5.

Specific examples of the compounds represented by formula (3) include ethoxylated trimethylolpropane tri(meth)acrylate and ethoxylated ditrimethylolpropane tetra(meth)acrylate each having an average number of EO modification of 1 to 5.

The compounds (1) to (3) may be used singly as the component (A), or two or more may be used in combination.

In particular, the component (A) preferably includes at least a compound (2) or a compound (3), and is more preferably ethoxylated dipentaerythritol hexa(meth)acrylate having an average number of EO modification of 1 to 3 or ethoxylated trimethylolpropane triacrylate having an average number of EO modification of 1 to 3.

A preferred lower limit of the content of the component (A) in the composition of the present invention is 1%, 2%, 3%, 5%, 7%, 10%, 15%, 20%, 25%, 30%, 35%, 40%, 45%, 50%, or 55% relative to the total amount of radically polymerizable compounds contained in the composition. A preferred upper limit of the content is 100%, 95%, 90%, 85%, 80%, 75%, 70%, 65%, 60%, 55%, 50%, 45%, 40%, 35%, 30%, or 25% relative to the total amount of radically polymerizable compounds contained in the composition.

As will be described later, the composition of the present invention may contain a radically polymerizable compound other than the component (A). Such compounds may be used in combination in accordance with the performance of a cured film that is required, for example, abrasion resistance, bleed resistance, adhesion to a substrate, antifogging properties, and antifogging durability. Thus, the optimal combination of the upper limit content and the lower limit content varies depending on the combination of the component (A) and other radically polymerizable compound. This will be explained later.

### [Water-soluble surfactants (B)]

The water-soluble surfactant (B) is a component that enhances antifogging properties and antifogging durability of a cured film. Here, water-soluble is defined to mean that the surfactant, when mixed with water in a mass ratio of 1:1 at 25°C, gives a mixture free from turbidity or visible separation. The water-solubility of the surfactant leads to better antifogging properties and antifogging durability of cured films. Cured films obtained with a water-insoluble surfactant are low in antifogging properties and antifogging durability.

The component (B) is selected from anionic surfactants, cationic surfactants, and nonionic surfactants, and may be a single component or a combination of multiple components.

The anionic surfactants may be any conventionally known surfactants that are water-soluble. Examples thereof include fatty acid salts, such as sodium oleate and potassium oleate; higher alcohol sulfate esters, such as sodium lauryl sulfate and ammonium lauryl sulfate; alkylbenzenesulfonate salts and alkylnaphthalenesulfonate salts, such as sodium dodecylbenzenesulfonate and sodium alkylnaphthalenesulfonate; naphthalenesulfonic acid dialkyl phosphate salts, malin condensates, dialkylsulfosuccinate salts, dialkylphosphate salts; polyoxyethylene sulfate salts, such as sodium polyoxyethylene alkyl phenyl ether sulfate; and fluorine-containing anionic surfactants, such as perfluoroalkylcarboxylate salts, perfluoroalkylsulfonate salts, and perfluoroalkylphosphate esters. In particular, dioctylsulfosuccinate salts are more preferable from the points of view of antifogging durability and bleed resistance.

The cationic surfactants may be any conventionally known surfactants that are water-soluble. Examples thereof include ethanolamines; amine salts, such as laurylamine acetate, triethanolamine monoformate, and stearamidoethyldiethylamine acetate; alkyltrimethylammonium salts, such as lauryltrimethylammonium chloride, stearyltrimethylammonium chloride, and cetyltrimethylammonium chloride; dialkyldimethylammonium salts, such as dilauryldimethylammonium chloride, distearyldimethylammonium chloride, lauryldimethylbenzylammonium chloride, and stearyldimethylbenzylammonium chloride; and fluorine-containing cationic surfactants, such as perfluoroalkyltrimethylammonium salts. In particular, quaternary ammonium salts having 10 to 36 carbon atoms are preferable, quaternary ammonium salts having 10 to 24 carbon atoms are more preferable, and alkyltrimethylammonium salts having 10 to 20 carbon atoms are still more preferable.

The nonionic surfactants may be any conventionally known surfactants that are water-soluble. Examples thereof include polyoxyethylene higher alcohol ethers, such as polyoxyethylene lauryl ether and polyoxyethylene oleyl ether; polyoxyethylene alkylaryl ethers, such as polyoxyethylene octylphenol and polyoxyethylene nonylphenol; polyoxyethylene acyl esters, such as polyoxyethylene glycol monostearate; polypropylene glycol ethylene oxide adducts; polyoxyethylene sorbitan fatty acid esters, such as polyoxyethylene sorbitan monolaurate and polyoxyethylene sorbitan monostearate; phosphate esters, such as alkylphosphate esters and polyoxyethylene alkyl ether phosphate esters; sugar esters, cellulose ethers; and fluorine-containing nonionic surfactants, such as perfluoroalkyl amine oxides, perfluoroalkyl ethylene oxide adducts, oligomers having a perfluoroalkyl group and a hydrophilic group, oligomers having a perfluoroalkyl group and a lipophilic group, oligomers having a perfluoroalkyl group and a lipophilic group, and oligomers having a perfluoroalkyl group, a hydrophilic group, and a lipophilic group. In particular, polyoxyalkylene alkyl ethers having 8 to 20 carbon atoms and polyoxyethylene styrenated phenyl ethers are preferable. In particular, polyoxyalkylene alkyl ethers having 8 to 20 carbon atoms are preferable. Polyoxyalkylene alkyl ethers having a C8-C20 hydrophobic group are more preferable. Polyoxyalkylene alkyl ethers having a C10-C16 hydrophobic group are still more preferable. Polyoxyalkylene alkyl ethers having an HLB value of 6 to 18 and containing a C10-C16 hydrophobic group and an ethylene oxide group are further preferable.

While the component (B) is not particularly limited, it is preferable that the component (B) include, among those described above, at least an anionic surfactant from the points of view of antifogging durability and bleed resistance, and it is more preferable that an anionic surfactant and a cationic surfactant be used in combination.

When an anionic surfactant and a cationic surfactant are used in combination, the blending ratio [(anionic)/(cationic)] is preferably in the range of 100/1 to 5/1, and particularly preferably in the range of 33/1 to 10/1. These ranges ensure that antifogging properties will last and the bleed resistance will be enhanced.

From the points of view of long-term antifogging durability and enhancement in bleed resistance, the content of the component (B) is preferably in the range of 0.5 to 10.0 mass%, more preferably in the range of 0.75 to 7.5 mass%, and particularly preferably in the range of 1.0 to 5.0 mass% relative to the total amount of radically polymerizable compounds contained in the composition.

The composition of the present invention may contain a radically polymerizable compound other than the component (A). Examples of the radically polymerizable compounds other than the components (A) include compounds (C) having a carboxyl group and a (meth)acryloyl group, compounds (D) having an alkoxylyl group and a (meth)acryloyl group, polyfunctional (meth)acrylates (E) that are not modified by ethylene oxide, and polyfunctional (meth)acrylates (F) having a polyethylene glycol structure. The components (E) are compounds that do not correspond to the components (C) or the components (D), and the components (F) are compounds that do not correspond to the components (A), the components (C), or the components (D).

### [Compounds (C) having a carboxyl group and a (meth)acryloyl group]

The compound (C) having a carboxyl group and a (meth)acryloyl group is a component that enhances the adhesion to a substrate, in particular, the adhesion to a glass substrate. The component (C) does not contain an alkoxylyl group in the molecule.

Examples of the components (C) include unsaturated monocarboxylic acids, such as (meth)acrylic acid, crotonic acid, o-, m-, and p-vinylbenzoic acids, α-haloalkyl, alkoxyl, halogen, nitro, or cyano (meth)acrylic acid derivatives, β-carboxyethyl (meth)acrylate, 2-(meth)acryloyloxyethyl succinate, ω-carboxypolycaprolactone mono(meth)acrylate, 2-(meth)acryloyloxyethyl hydrogen phthalate, 2-(meth)acryloyloxypropyl hydrogen phthalate, 2-(meth)acryloyloxypropyl hexahydrohydrogen phthalate, and 2-(meth)acryloyloxypropyl tetrahydrohydrogen phthalate; unsaturated dicarboxylic acids, such as fumaric acid, maleic acid, itaconic acid, citraconic acid, alkenylsuccinic acids, alkadienylsuccinic acids, and endic acids; half ester compounds obtained from the unsaturated dicarboxylic acids and monoalcohols; and reaction products of an alcohol having a (meth)acryloyl group with an acid anhydride, such as tetrahydrophthalic anhydride, phthalic anhydride, hexahydrophthalic anhydride, succinic anhydride, or maleic anhydride.

Examples of the alcohols having a (meth)acryloyl group include monofunctional acrylates, such as hydroxyalkyl methacrylates including 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, glycerol mono(meth)acrylate, and cyclohexanedimethanol mono(meth)acrylate; and polyfunctional acrylates, such as trimethylolpropane di(meth)acrylate, pentaerythritol tri(meth)acrylate, ditrimethylolpropane tri(meth)acrylate, dipentaerythritol penta(meth)acrylate, dipentaerythritol ethylene oxide-modified penta(meth)acrylate, dipentaerythritol propylene oxide-modified penta(meth)acrylate, dipentaerythritol caprolactone-modified penta(meth)acrylate, glycerol acrylate methacrylate, glycerol dimethacrylate, 2-hydroxy-3-acryloylpropyl methacrylate, reaction products of an epoxy group-containing compound with a carboxy (meth)acrylate, and hydroxyl group-containing polyol polyacrylates. Furthermore, commercially available products, such as, for example, ARONIX (registered trademark) M510 and M520 (manufactured by TOAGOSEI CO., LTD.) may also be used. These compounds may be used singly, or two or more may be used in combination.

In particular, the component (C) is more preferably, for example, (meth)acrylic acid or a reaction product of an acid anhydride with an alcohol having a (meth)acryloyl group, and is particularly preferably 2-(meth)acryloyloxyethyl succinate or 2-(meth)acryloyloxyethyl hexahydrophthalate.

A preferred lower limit of the content of the component (C) in the composition of the present invention is 0.5%, 1%, 2%, 3%, 5%, 7%, 10%, or 15% relative to the total amount of radically polymerizable compounds contained in the composition. A preferred upper limit of the content is 30%, 25%, 20%, or 15% relative to the total amount of radically polymerizable compounds contained in the composition.

As will be described later, the composition of the present invention may contain a radically polymerizable compound other than the component (A) and the component (C). Such compounds may be used in combination in accordance with the performance of a cured film that is required, for example, abrasion resistance, bleed resistance, adhesion to a substrate, antifogging properties, and antifogging durability. Thus, the optimal combination of the upper limit content and the lower limit content varies depending on the combination of the components (A) and (C) and other radically polymerizable compound. This will be explained later.

### [Compounds (D) having an alkoxylyl group and a (meth)acryloyl group]

The compound (D) having an alkoxylyl group and a (meth)acryloyl group is a component that enhances the adhesion to a substrate, in particular, the adhesion to a glass substrate. The component (D) does not contain a carboxyl group in the molecule.

Examples of the alkoxysilyl groups in the components (D) include silyl groups substituted by 1 to 3, preferably 2 or 3 alkyl groups having 1 to 4 carbon atoms, preferably 1 to 2 carbon atoms, such as trimethoxysilyl group, triethoxysilyl group, and dimethoxysilyl group. Among these, trimethoxysilyl group and triethoxysilyl group are preferable from the point of view of the adhesion to a substrate. Trimethoxysilyl group is particularly preferable.

The components (D) may be any compounds without limitation as long as having an alkoxysilyl group and a (meth)acryloyl group in the structure of the compound. Examples include structures in which an alkoxysilyl group is introduced by hydrosilylation on the allyl group of an allyl acrylate or an allyl methacrylate. Exemplary structures thus derived include (3-trimethoxysilylpropyl) acrylate, (3-triethoxysilylpropyl) acrylate, (3-trimethoxysilylpropyl) methacrylate, and (3-triethoxysilylpropyl) methacrylate. Commercially available products that may be used include product names "KBM510", "KBM5103", "KBM503", and "KBM5803" (all manufactured by Shin-Etsu Chemical Co., Ltd.). These compounds may be used singly, or two or more may be used in combination.

Among those described above, 3-(meth)acryloxypropyltrimethoxysilane is particularly preferable from the point of view of enhancements in adhesion to a substrate and heat resistance. The compounds described above may be used singly, or two or more may be used in combination.

A preferred lower limit of the content of the component (D) in the composition of the present invention is 0.5%, 1%, 2%, 3%, 5%, 7%, 10%, or 15% relative to the total amount of radically polymerizable compounds contained in the composition. A preferred upper limit of the content is 30%, 25%, 20%, or 15% relative to the total amount of radically polymerizable compounds contained in the composition.

As will be described later, the composition of the present invention may contain a radically polymerizable compound other than the component (A) and the component (D). Such compounds may be used in combination in accordance with the performance of a cured film that is required, for example, abrasion resistance, bleed resistance, adhesion to a substrate, antifogging properties, and antifogging durability. Thus, the optimal combination of the upper limit content and the lower limit content varies depending on the combination of the components (A) and (D) and other radically polymerizable compound. This will be explained later.

### [Polyfunctional (meth)acrylates (E) that are not modified by ethylene oxide]

The polyfunctional (meth)acrylate (E) that is not modified by ethylene oxide is a component that enhances the adhesion to a substrate. The component (E) is a compound containing no carboxyl groups or/and no alkoxylyl groups.

Examples of the polyfunctional (meth)acrylates (E) that are not modified by ethylene oxide include 1,4-butanediol di(meth)acrylate, 1,6-hexanediol di(meth)acrylate, 1,9-nonanediol di(meth)acrylate, neopentyl glycol di(meth)acrylate, glycerol tri(meth)acrylate modified by ethylene oxide, glycerol tri(meth)acrylate modified by propylene oxide, trimethylolpropane tri(meth)acrylate, hydroxypivalic acid-modified trimethylolpropane tri(meth)acrylate, pentaerythritol tri(meth)acrylate, pentaerythritol tetra(meth)acrylate, dipentaerythritol tri(meth)acrylate, dipentaerythritol tetra(meth)acrylate, dipentaerythritol penta(meth)acrylate, dipentaerythritol hexa(meth)acrylate, tripentaerythritol tetra(meth)acrylate, tripentaerythritol penta(meth)acrylate, tripentaerythritol hexa(meth)acrylate, tripentaerythritol hepta(meth)acrylate, tripentaerythritol octa(meth)acrylate, urethane (meth)acrylate compounds obtained by reacting an isocyanate compound with an alcohol compound, polyester (meth)acrylate compounds synthesized by condensation reaction of a polyhydric alcohol with (meth)acrylic acid and a polyfunctional carboxylic acid, and epoxy (meth)acrylate compounds synthesized by addition reaction of a bisphenol-type epoxy resin or a novolac-type epoxy resin with (meth)acrylic acid. Commercially available products that may be used include dipentaerythritol penta(meth)acrylate (such as product name "ARONIX (registered trademark)" series (including M-400, M-403, M-404, M-405, and M-406) manufactured by TOAGOSEI CO., LTD.), and pentaerythritol tri(meth)acrylate (such as product name "ARONIX (registered trademark)" series (including M-306, M-305, M-303, M-452, and M-450) manufactured by TOAGOSEI CO., LTD.). These compounds may be used singly, or two or more may be used in combination.

From the point of view of enhancements in adhesion to a substrate, abrasion resistance, and damp heat resistance, in particular, compounds having three or more (meth)acryloyl groups in the molecule are preferable, and dipentaerythritol hexa(meth)acrylate is particularly preferable.

A preferred lower limit of the content of the component (E) in the composition of the present invention is 7%, 9%, 10%, 18%, 27%, 30%, or 50% relative to the total amount of radically polymerizable compounds contained in the composition. A preferred upper limit of the content is 95%, 90%, 70%, 66.5%, 63%, 50%, 49%, 27%, or 25% relative to the total amount of radically polymerizable compounds contained in the composition.

As will be described later, the composition of the present invention may contain a radically polymerizable compound other than the component (A) and the component (E). Such compounds may be used in combination in accordance with the performance of a cured film that is required, for example, abrasion resistance, bleed resistance, adhesion to a substrate, antifogging properties, and antifogging durability. Thus, the optimal combination of the upper limit content and the lower limit content varies depending on the combination of the components (A) and (E) and other radically polymerizable compound. This will be explained later.

### [Polyfunctional (meth)acrylates (F) having a polyethylene glycol structure]

The polyfunctional (meth)acrylate (F) having a polyethylene glycol structure imparts hydrophilicity and increases the rigidity of a cured film, thereby enhancing antifogging durability and bleed resistance. The component (F) is a compound that does not correspond to the component (A), the component (C), or the component (D).

The component (F) may be a known component, and raw materials and manufacturing methods are not limited. For example, the component (F) may be a product from polyethylene glycol, an isocyanate compound, and a hydroxyl group-containing (meth)acrylate compound as essential ingredients, or may be a product from polyethylene glycol and a carboxyl group-containing (meth)acrylate compound as essential ingredients.

The polyethylene glycol used here may be a commercially available product, with examples including product name "PEG" series (including PEG-200, PEG-400, PEG-600, PEG-1000, PEG-2000, and PEG-4000) manufactured by Sanyo Chemical Industries, Ltd.

Examples of the isocyanate compounds include aromatic isocyanates, such as diphenylmethane diisocyanate and toluene diisocyanate; aliphatic isocyanates, such as 1,6-hexamethylene diisocyanate, 1,4-butane diisocyanate, 2,2,4-trimethylhexamethylene diisocyanate, 2,4,4-trimethylhexamethylene diisocyanate, lysine diisocyanate, and lysine triisocyanate; and alicyclic isocyanate compounds, such as isophorone diisocyanate, 4,4'-methylene bis(cyclohexyl isocyanate), 1,3-bis(isocyanatomethyl)cyclohexane, norbornane diisocyanate, hydrogenated xylene diisocyanate, 2-methyl-1,3-diisocyanatocyclohexane, and 2-methyl-1,5-diisocyanatocyclohexane. Dimers or trimers of these isocyanate compounds (such as isocyanurates, biurets, and allophanates) may also be used. From the points of view of antifogging durability and bleed resistance after a damp heat test, in particular, aliphatic isocyanates are more preferable and it is particularly preferable to use hexamethylene diisocyanate or an isocyanurate thereof.

Examples of the hydroxyl group-containing (meth)acrylate compounds include dipentaerythritol penta(meth)acrylate (for example, commercially available under the product name "ARONIX (registered trademark)" series (including M-400, M-403, M-404, M-405, and M-406) from TOAGOSEI CO., LTD.), pentaerythritol tri(meth)acrylate (for example, commercially available under the product name "ARONIX (registered trademark)" series (including M-306, M-305, M-303, M-452, and M-450) from TOAGOSEI CO., LTD.), 2-hydroxyethyl (meth)acrylate, 2-hydroxypropyl (meth)acrylate, 3-hydroxypropyl (meth)acrylate, 4-hydroxybutyl (meth)acrylate, 2-hydroxybutyl (meth)acrylate, caprolactone-modified hydroxymono(meth)acrylate (such as, for example, product name "PLACCEL (registered trademark) FA-2D" manufactured by Daicel Corporation), polycarbonate-modified hydroxymono(meth)acrylate (such as, for example, product name "HEMAC" (registered trademark) manufactured by Daicel Corporation), polyethylene glycol-modified or polypropylene glycol-modified hydroxymono(meth)acrylate (such as, for example, product names "BLEMMER" (registered trademark) AE-200" and "BLEMMER (registered trademark) AP-400" manufactured by NOF CORPORATION).

Examples of the carboxyl group-containing compounds include unsaturated monocarboxylic acids, such as (meth)acrylic acid, crotonic acid, o-, m-, and p-vinylbenzoic acids, α-haloalkyl, alkoxyl, halogen, nitro, or cyano (meth)acrylic acid derivatives, β-carboxyethyl (meth)acrylate, 2-(meth)acryloyloxyethyl succinate, ω-carboxypolycaprolactone mono(meth)acrylate, 2-(meth)acryloyloxyethyl hydrogen phthalate, 2-(meth)acryloyloxypropyl hydrogen phthalate, 2-(meth)acryloyloxypropyl hexahydrohydrogen phthalate, and 2-(meth)acryloyloxypropyl tetrahydrohydrogen phthalate; unsaturated dicarboxylic acids, such as fumaric acid, maleic acid, itaconic acid, citraconic acid, alkenylsuccinic acids, alkadienylsuccinic acids, and endic acids; half ester compounds obtained from the unsaturated dicarboxylic acids and monoalcohols; and reaction products of an alcohol having a (meth)acryloyl group with an acid anhydride, such as tetrahydrophthalic anhydride, phthalic anhydride, hexahydrophthalic anhydride, succinic anhydride, or maleic anhydride.

The component (F) may be a single compound or a combination of two or more compounds. From the points of view of antifogging durability and bleed resistance, the component (F) is preferably a compound containing 4 or more, more preferably 6 or more (meth)acryloyl groups in the molecule. From the same points of view, the number average molecular weight of the polyethylene glycol used as a raw material for the component (F) is preferably 200 to 4000, preferably 400 to 4000, and particularly preferably 600 to 4000.

A preferred lower limit of the content of the component (F) in the composition of the present invention is 10%, 20%, 30%, 40%, or 50% relative to the total amount of radically polymerizable compounds contained in the composition. A preferred upper limit of the content is 90%, 80%, 70%, 60%, or 50% relative to the total amount of radically polymerizable compounds contained in the composition.

As will be described later, the composition of the present invention may contain a radically polymerizable compound other than the component (A) and the component (F). Such compounds may be used in combination in accordance with the performance of a cured film that is required, for example, abrasion resistance, bleed resistance, adhesion to a substrate, antifogging properties, and antifogging durability. Thus, the optimal combination of the upper limit content and the lower limit content varies depending on the combination of the components (A) and (F) and other radically polymerizable compound. This will be explained later.

### <Combinations of radically polymerizable compounds>

As already described, the composition of the present invention contains the component (A) as an essential radically polymerizable compound. One or more of the components (C) to (F) may be optionally used in combination in accordance with the performance of a cured film that is required, for example, abrasion resistance, bleed resistance, adhesion to a substrate, antifogging properties, and antifogging durability. Exemplary combinations of the components are described below.

### [Example in which the component (A) is added:]

The composition may contain the component (A) as a radically polymerizable compound and may be free from the components (C) to (F). Even in this case, the composition can form a cured film having abrasion resistance, bleed resistance, adhesion to a substrate, antifogging properties, and antifogging durability.

When the composition does not contain the components (C) to (F), the content of the component (A) relative to the total amount of radically polymerizable compounds contained in the composition is preferably 50 to 100 mass%, particularly preferably in the range of 70 to 100 mass%, and particularly preferably in the range of 90 to 100 mass%. These ranges ensure that the composition will form a cured film with excellent abrasion resistance, bleed resistance, adhesion to a substrate, antifogging properties, and antifogging durability.

When higher adhesion to a substrate is required, it is preferable that the component (C) and the component (D) be further added. In particular, the addition of the component (C) and the component (D) provides significant enhancements in the adhesion to a glass substrate.

### [Example in which the component (A), the component (C), and the component (D) are added:]

For example, the composition may contain the component (A), the component (C), and the component (D) as radically polymerizable compounds and may be free from the component (E) and the component (F), as described below.

The combined use of the component (A) with the component (C) and the component (D) enhances the adhesion to a substrate before and after heat resistance testing. While the combined use provides enhancements in adhesion to various known substrates in general, the adhesion to glass substrates is particularly enhanced.

When the component (A), the component (C), and the component (D) are added, the content of the component (A) is preferably in the range of 50 to 99 mass%, more preferably in the range of 60 to 95 mass%, and particularly preferably in the range of 70 to 90 mass% relative to the total amount of radically polymerizable compounds contained in the composition. The total content of the component (C) and the component (D) is preferably in the range of 1 to 50 mass%, more preferably in the range of 5 to 40 mass%, and particularly preferably in the range of 10 to 30 mass% relative to the total amount of radically polymerizable compounds contained in the composition.

The above control of the content of the component (A) and the total content of the component (C) and the component (D) provides further enhancements in the adhesion to a substrate after a damp heat test while ensuring that antifogging properties, antifogging durability, bleed resistance, and abrasion resistance are enhanced.

The blending ratio of the component (D) to the component (C) [(C)/(D)] is preferably in the range of 90/10 to 10/90, more preferably in the range of 80/20 to 20/80, and particularly preferably in the range of 75/25 to 25/75. The above ranges ensure that the adhesion to a substrate after a damp heat test is enhanced.

When further enhancements in bleed resistance and abrasion resistance are required, it is preferable that the component (E) be further added.

### [Example in which the component (A), the component (C), the component (D), and the component (E) are added:]

For example, the composition may contain the component (A), the component (C), the component (D), and the component (E) as radically polymerizable compounds and may be free from the component (F), as described below.

The addition of the component (E) together with the component (C) and the component (D) provides further enhancements in bleed resistance and abrasion resistance while ensuring that the adhesion to a substrate is enhanced.

When all the components (C) to (E) are added, the content of the component (A) is preferably in the range of 2 to 70 mass%, more preferably in the range of 3.5 to 65 mass%, and particularly preferably in the range of 5 to 50 mass% relative to the total amount of radically polymerizable compounds contained in the composition. The total content of the components (C) to (E) is preferably in the range of 30 to 98 mass%, more preferably in the range of 35 to 97 mass%, and particularly preferably in the range of 50 to 95 mass% relative to the total amount of radically polymerizable compounds contained in the composition.

The above control of the content of the component (A) and the total content of the components (C) to (E) provides further enhancements in the adhesion to a substrate after a damp heat test, bleed resistance, and abrasion resistance while ensuring that excellent antifogging properties and antifogging durability are maintained.

The blending ratio of the component (C), the component (D), and the component (E) [(C)/(D)/(E)] is preferably in the range of 40/40/20 to 15/15/70, more preferably in the range of 30/30/40 to 16/16/68, and particularly preferably in the range of 25/25/50 to 20/20/80. The above ranges ensure that the adhesion to a substrate after a damp heat test, bleed resistance, and abrasion resistance are enhanced.

When further enhancements in antifogging durability are required, it is preferable that the component (F) be further added.

### [Example in which the component (A), the component (C), the component (D), the component (E), and the component (F) are added:]

For example, the composition may contain the component (A), the component (C), the component (D), the component (E), and the component (F) as radically polymerizable compounds, as described below.

The addition of the component (F) together with the components (C) to (E) provides further enhancements in antifogging durability while ensuring that the adhesion to a substrate after a damp heat test, bleed resistance, and abrasion resistance are enhanced.

When all the components (C) to (F) are added, the content of the component (A) is preferably in the range of 1 to 56 mass%, more preferably in the range of 2 to 49 mass%, and particularly preferably in the range of 3 to 42 mass% relative to the total amount of radically polymerizable compounds contained in the composition.

The total content of the component (C) and the component (D) is preferably in the range of 5 to 35 mass%, more preferably in the range of 8 to 32 mass%, and particularly preferably in the range of 10 to 30 mass% relative to the total amount of radically polymerizable compounds contained in the composition.

The total content of the component (E) and the component (F) is preferably in the range of 28 to 89 mass%, more preferably in the range of 35 to 88 mass%, and particularly preferably in the range of 42 to 87 mass% relative to the total amount of radically polymerizable compounds contained in the composition.

The above control of the content of the component (A), the total content of the component (C) and the component (D), and the total content of the component (E) and the component (F) provides further enhancements in antifogging durability while ensuring that excellent antifogging properties, adhesion to a substrate after a damp heat test, bleed resistance, and abrasion resistance are maintained.

When all the components (C) to (F) are added, the blending ratio of the component (F) to the component (E) [(E)/(F)] is preferably in the range of 10/90 to 75/25, more preferably in the range of 20/80 to 55/45, and particularly preferably in the range of 25/75 to 41/59. The above ranges ensure that the adhesion to a substrate after a damp heat test, bleed resistance, and abrasion resistance are enhanced.

In order to enhance the adhesion to glass substrates, it is particularly preferable that the component (C) and the component (D) be added. When, however, the substrate is not glass and is, for example, a resin substrate, the composition, even without containing the component (C) and the component (D), can form a cured film with excellent antifogging properties, antifogging durability, adhesion to the substrate, abrasion resistance, and bleed resistance.

### [Example in which the component (A) and the component (E) are added:]

For example, the composition may contain the component (A) and the component (E) as radically polymerizable compounds and may be free from the component (C), the component (D), and the component (F), as described below.

The addition of the component (E) together with the component (A) provides further enhancements in antifogging properties, antifogging durability, adhesion to a substrate, abrasion resistance, and bleed resistance.

When the component (E) is added but the component (C), the component (D), and the component (F) are not added, the content of the component (A) is preferably in the range of 5 to 90 mass%, more preferably in the range of 10 to 70 mass%, and particularly preferably in the range of 30 to 50 mass% relative to the total amount of radically polymerizable compounds contained in the composition. The content of the component (E) is preferably in the range of 10 to 95 mass%, more preferably in the range of 30 to 90 mass%, and particularly preferably in the range of 50 to 70 mass% relative to the total amount of radically polymerizable compounds contained in the composition.

The above control of the content of the component (A) and the content of the component (E) provides further enhancements in antifogging properties, antifogging durability, adhesion to a substrate, abrasion resistance, and bleed resistance.

When higher bleed resistance and antifogging durability are required, it is preferable that the component (F) be further added.

### [Example in which the component (A), the component (E), and the component (F) are added:]

For example, the composition may contain the component (A), the component (E), and the component (F) as radically polymerizable compounds and may be free from the component (C) and the component (D), as described below.

The addition of the component (E) and the component (F) together with the component (A) provides further enhancements in bleed resistance and antifogging durability.

When the component (E) and the component (F) are added but the component (C) and the component (D) are not added, the content of the component (A) is preferably in the range of 1 to 63 mass%, more preferably in the range of 2 to 56 mass%, and particularly preferably in the range of 3 to 49 mass%. The total content of the component (E) and the component (F) is preferably in the range of 30 to 99 mass%, more preferably in the range of 44 to 98 mass%, and particularly preferably in the range of 50 to 97 mass% relative to the total amount of radically polymerizable compounds contained in the composition.

The above control of the content of the component (A) and the total content of the component (E) and the component (F) provides further enhancements in bleed resistance and antifogging durability.

The blending ratio of the component (F) to the component (E) [(E)/(F)] is preferably in the range of 9/91 to 75/25, more preferably in the range of 18/82 to 55/45, and particularly preferably in the range of 25/75 to 38/72. The above ranges ensure that bleed resistance and antifogging durability are enhanced.

Furthermore, the active energy ray-curable antifogging coating composition of the present invention may include a photopolymerization initiator.

### [Photopolymerization initiators]

Examples of the photopolymerization initiators include 1-hydroxycyclohexyl phenyl ketone, 2-hydroxy-2-methyl-1-phenylpropan-1-one, 1-[4-(2-hydroxyethoxy)phenyl]-2-hydroxy-2-methyl-1-propan-1-one, thioxanthone and thioxanthone derivatives, 2,2'-dimethoxy-1,2-diphenylethan-1-one, diphenyl(2,4,6-trimethoxybenzoyl)phosphine oxide, 2,4,6-trimethylbenzoyldiphenylphosphine oxide, bis(2,4,6-trimethylbenzoyl)phenylphosphine oxide, 2-methyl-1-(4-methylthiophenyl)-2-morpholinopropan-1-one, and 2-benzyl-2-dimethylamino-1-(4-morpholinophenyl)-butan-1-one.

The photopolymerization initiators may be used singly, or two or more may be used in combination.

The content of the photopolymerization initiator is preferably 0.01 to 20 parts by mass, more preferably 0.1 to 10 parts by mass, and particularly preferably 1 to 5 parts by mass with respect to the total amount of radically polymerizable compounds contained in the composition. When the content of the photopolymerization initiator is 0.1 part by mass or more, the curing reaction proceeds favorably and the cured film that is obtained advantageously attains high hardness. When, on the other hand, the content of the photopolymerization initiator is 10 parts by mass or less, problems, such as yellowing, are unlikely to occur and the cured product that is obtained advantageously exhibits high transparency.

Furthermore, the composition of the present invention may include a solvent. The addition of a solvent controls the viscosity of the composition.

### [Solvents]

Examples of the solvents include alcohol solvents, such as methanol, ethanol, 1-propanol, t-butanol, and diacetone alcohol; alcohol ether solvents, such as ethylene glycol monomethyl ether, ethylene glycol monoethyl ether, ethylene glycol monobutyl ether, propylene glycol monomethyl ether, propylene glycol monoethyl ether, carbitol, and cellosolve; ketone solvents, such as acetone, methyl ethyl ketone, methyl isobutyl ketone, and cyclohexanone; ester solvents, such as methyl acetate, ethyl acetate, and butyl acetate; and aromatic solvents, such as toluene, xylene, and dibutylhydroxytoluene.

The solvents may be used singly, or two or more may be used in combination.

The content of the solvent is preferably 0 to 300 parts by mass, and more preferably 0 to 100 parts by mass with respect to 100 parts by mass of the solid content in the active energy ray-curable antifogging coating composition. When the content of the solvent is 300 parts by mass or less, the control of film thickness is advantageously facilitated. When the content of the solvent is 10 parts by mass or more, a choice can be advantageously made from various application techniques, such as spray coating and flow coating.

Furthermore, the active energy ray-curable antifogging coating composition of the present invention may contain additional additives where necessary.

### [Additional components]

Typical examples of the additional components include radically polymerizable compounds, various resins, fillers, UV absorbers, and leveling agents. Furthermore, for example, the composition may contain inorganic pigments, organic pigments, extender pigments, clay minerals, waxes, catalysts, surfactants other than the components (B), stabilizers, flow modifiers, coupling agents, dyes, rheology control agents, antioxidants, and plasticizers.

(Meth)acrylate compounds other than the components (A) and (C) to (F), and compounds having a double bond, such as a vinyl group, may be added as radically polymerizable compounds. Specific examples include monofunctional (meth)acrylate compounds α having no carboxyl groups and/or no alkoxylyl groups, and compounds β having all of an alkoxylyl group, a carboxyl group, and a (meth)acryloyl group in the molecule.

Examples of the monofunctional (meth)acrylate compounds α having no carboxyl groups and/or no alkoxylyl groups include acryloylmorpholine, hydroxyethyl (meth)acrylate, hydroxypropyl (meth)acrylate, hydroxybutyl (meth)acrylate, caprolactone-modified hydroxy(meth)acrylate (for example, product name "PLACCEL" manufactured by Daicel Corporation), reaction product of phthalic anhydride or succinic anhydride with a hydroxyalkyl (meth)acrylate, mono(meth)acrylate of a polyester diol obtained from succinic acid and ethylene glycol, mono(meth)acrylate of a polyester diol obtained from succinic acid and propylene glycol, polyethylene glycol mono(meth)acrylate, polypropylene glycol mono(meth)acrylate, 2-hydroxy-3-(meth)acryloyloxypropyl (meth)acrylate, acrylamide, dimethylacrylamide, diethylacrylamide, amino(meth)acrylate, (meth)acrylates containing an ionic group, such as a sulfonic acid group or a quaternary ammonium salt, and adducts of (meth)acrylic acid with various epoxy esters.

Examples of the compounds β having all of an alkoxylyl group, a carboxyl group, and a (meth)acryloyl group in the molecule include reaction products obtained by dehydration condensation reaction between a compound having a trialkoxysilyl group and succinic anhydride (such as X12-967C manufactured by Shin-Etsu Chemical Co., Ltd.) and a compound having a trialkoxysilyl group and a (meth)acryloyl group (such as KBM-503 or KBM-5103 manufactured by Shin-Etsu Chemical Co., Ltd.); and reaction products obtained by modifying a hydroxyl group in an epoxy acrylate with an acid anhydride and reacting the resultant product partially with a (meth)acrylate having a glycidyl group.

Furthermore, a liquid organic polymer may be used to control the viscosity. The liquid organic polymer is a liquid organic polymer that does not directly contribute to the curing reaction, with examples including carboxyl group-containing polymer modified products (FLOWLEN G-900, NC-500; KYOEISHA CHEMICAL Co., LTD.), acrylic polymers (FLOWLEN WK-20; manufactured by KYOEISHA CHEMICAL Co., LTD.), amine salts of special modified phosphoric acid esters (HIPLAAD (registered trademark) ED-251; manufactured by Kusumoto Chemicals, Ltd.), and modified acrylic block copolymers (DISPERBYK (registered trademark) 2000; manufactured by BYK-Chemie GmbH).

The resins used here may be thermosetting resins and thermoplastic resins.

The thermosetting resins are resins that are rendered substantially insoluble and infusible when cured by, for example, heating, radiation, or a catalyst. Specifically, for example, the thermosetting resins are resins that are rendered substantially insoluble and infusible when cured by, for example, heating, radiation, or a catalyst. Specific examples thereof include phenolic resins, urea resins, melamine resins, benzoguanamine resins, alkyd resins, unsaturated polyester resins, vinyl ester resins, diallyl terephthalate resins, epoxy resins, silicone resins, urethane resins, furan resins, ketone resins, xylene resins, thermosetting polyimide resins, benzoxazine resins, active ester resins, aniline resins, cyanate ester resins, and styrene-maleic anhydride (SMA) resins. The thermosetting resins may be used singly, or two or more may be used in combination.

The thermoplastic resins are resins that become moldable when heated. Specific examples thereof include polyethylene resins, polypropylene resins, polystyrene resins, rubber-modified polystyrene resins, acrylonitrile-butadiene-styrene (ABS) resins, acrylonitrile-styrene (AS) resins, polymethyl methacrylate resins, acrylic resins, polyvinyl chloride resins, polyvinylidene chloride resins, polyethylene terephthalate resins, ethylene vinyl alcohol resins, cellulose acetate resins, ionomer resins, polyacrylonitrile resins, polyamide resins, polyacetal resins, polybutylene terephthalate resins, polylactic acid resins, polyphenylene ether resins, modified polyphenylene ether resins, polycarbonate resins, polysulfone resins, polyphenylene sulfide resins, polyetherimide resins, polyethersulfone resins, polyarylate resins, thermoplastic polyimide resins, polyamide-imide resins, polyether ether ketone resins, polyketone resins, liquid crystal polyester resins, fluororesins, syndiotactic polystyrene resins, and cyclic polyolefin resins. The thermoplastic resins may be used singly, or two or more may be used in combination.

To enhance hard coating properties, silica may be added as a filler.

The silica is not limited. Known silica fine particles, such as powdered silica and colloidal silica, may be used. Examples of the commercially available powdered silica fine particles include product name "Aerosil (registered trademark)" series (such as 50 and 200) manufactured by NIPPON AEROSIL CO., LTD., product name "SILDEX" series (such as H31, H32, H51, H52, H121, and H122) manufactured by AGC Inc., product name "E220A" or "E220" manufactured by Tosoh Silica Corporation, product name "SYLYSIA (registered trademark) 470" manufactured by FUJI SILYSIA CHEMICAL LTD., and product name "SG Flakes" manufactured by Nippon Sheet Glass Co., Ltd.

Examples of the commercially available colloidal silica include product names "Methanol Silica Sol", "IPA-ST", "MEK-ST", "PGM-ST", "NBA-ST", "XBA-ST", "DMAC-ST", "ST-UP", "STOUP", "ST-20", "ST-40", "ST-C", "ST-N", "ST-O", "ST-50", and "ST-OL" all manufactured by Nissan Chemical Corporation.

Reactive silica may also be used as silica. Examples of the reactive silica include reactive compound-modified silica. Examples of the reactive compounds include reactive silane-coupling agents having a hydrophobic group, compounds having a (meth)acryloyl group, compounds having a maleimide group, and compounds having a glycidyl group.

Examples of the commercially available powdered silica modified with a compound having a (meth)acryloyl group include product names "Aerosil (registered trademark) RM50" and "Aerosil (registered trademark) R711" manufactured by NIPPON AEROSIL CO., LTD. Examples of the commercially available colloidal silica modified with a compound having a (meth)acryloyl group include product names "MIBK-SD", "MIBK-SD-L", "MIBK-AC-2140Z", and "MEK-AC-2140Z" manufactured by Nissan Chemical Corporation. Examples of the reactive silica further include silica obtained by modification with a glycidyl group followed by addition reaction with acrylic acid, such as 3-glycidoxypropyltrimethoxysilane, and silica modified by urethane-forming reaction of 3-isocyanatopropyltriethoxysilane with a compound having a hydroxyl group and a (meth)acryloyl group.

The shape of the silica fine particles is not particularly limited, and spherical, hollow, porous, rod-like, plate-like, fibrous, or amorphous silica may be used. Examples of the commercially available hollow silica fine particles include product name "SiliNax (registered trademark)" manufactured by Nittetsu Mining Co., Ltd.

The primary particle size is preferably in the range of 5 to 200 nm. When the primary particle size is 5 nm or more, the inorganic fine particles are sufficiently dispersed in the composition. When the primary particle size is 200 nm or less, sufficient strength of cured products can be ensured.

The amount in which the silica is added is preferably 3 to 60 mass% based on 100 mass% of the composition.

Examples of the fillers other than silica include inorganic fillers and organic fillers. The shape of the fillers is not limited, and the fillers may be particles, plates, or fibers.

Fillers with excellent heat resistance include alumina, magnesia, titania, and zirconia. Fillers with excellent thermal conductivity include boron nitride, aluminum nitride, alumina oxide, titanium oxide, magnesium oxide, zinc oxide, and silicon oxide. Fillers with excellent electrical conductivity include metal fillers and/or metal-coated fillers using elemental metals or alloys (such as, for example, iron, copper, magnesium, aluminum, gold, silver, platinum, zinc, manganese, and stainless steel). Fillers with excellent barrier properties include minerals, such as mica, clay, kaolin, talc, zeolite, wollastonite, and smectite, potassium titanate, magnesium sulfate, sepiolite, zonolite, aluminum borate, calcium carbonate, titanium oxide, barium sulfate, zinc oxide, and magnesium hydroxide. Fillers with high refractive index include barium titanate, zirconia oxide, and titanium oxide. Fillers exhibiting photocatalytic properties include photocatalytic metals, such as titanium, cerium, zinc, copper, aluminum, tin, indium, phosphorus, carbon, sulfur, tellurium, nickel, iron, cobalt, silver, molybdenum, strontium, chromium, barium, and lead, composites of the above metals, and oxides thereof. Fillers with excellent abrasion resistance include metals, such as alumina, zirconia, and magnesium oxide, and composites and oxides thereof. Fillers with excellent electrical conductivity include metals, such as silver and copper, tin oxide, and indium oxide. Fillers with excellent UV shielding include titanium oxide and zinc oxide.

These inorganic fine particles may be selected appropriately in accordance with use applications. The inorganic fine particles may be used singly, or a plurality thereof may be used in combination. The above inorganic fine particles possess various properties other than those described above and appropriate selection may be made in accordance with use applications.

Examples of the inorganic fibers include such inorganic fibers as carbon fibers, glass fibers, boron fibers, alumina fibers, and silicon carbide fibers, as well as carbon fibers, activated carbon fibers, graphite fibers, glass fibers, tungsten carbide fibers, silicon carbide fibers (fibers of silicon carbide), ceramic fibers, alumina fibers, natural fibers, mineral fibers, such as basalt, boron fibers, boron nitride fibers, boron carbide fibers, and metal fibers. Examples of the metal fibers include aluminum fibers, copper fibers, brass fibers, stainless steel fibers, and steel fibers.

Examples of the organic fibers include synthetic fibers made of resin materials, such as polybenzazoles, aramids, PBO (poly-p-phenylene benzoxazoles), polyphenylene sulfides, polyesters, acrylics, polyamides, polyolefins, polyvinyl alcohols, and polyarylates, natural fibers, such as cellulose, pulp, cotton, wool, and silk, and regenerated fibers, such as proteins, polypeptides, and alginic acid.

The amount in which the filler is added is preferably 0 to 60 mass% based on 100 mass% of the composition.

Examples of the UV absorbers include benzophenone-based, benzotriazole-based, benzotriazine-based, cyclic imino ester-based, cyanoacrylate-based, and polymer-type UV absorbers.

To enhance light resistance, a light stabilizer may also be added to the composition of the present invention. Examples of the light stabilizers include hindered amine stabilizers (HALS).

Various surface modifiers may be added to the composition of the present invention for the purpose of, for example, increasing leveling properties at the time of application, or improving scratch resistance by increasing the slidability of cured films. The surface modifiers used here may be various additives that modify surface properties and are commercially available under the names of, for example, surface conditioners, leveling agents, slippery agents, and antifouling agents. In particular, silicone-based surface modifiers and fluorine-based surface modifiers are suitable.

Specific examples include silicone polymers and oligomers having a silicone chain and a polyalkylene oxide chain, silicone polymers and oligomers having a silicone chain and a polyester chain, fluorine polymers and oligomers having a perfluoroalkyl group and a polyalkylene oxide chain, and fluorine polymers and oligomers having a perfluoroalkyl ether chain and a polyalkylene oxide chain. One or more of these may be used. A surface modifier containing a (meth)acryloyl group in the molecule may be used for the purpose of, for example, increasing the slide durability. Specific examples of the surface modifiers include EBECRYL (registered trademark) 350 (manufactured by DAICEL-ALLNEX LTD.), BYK-333 (manufactured by BYK-Chemie Japan), BYK-377 (manufactured by BYK-Chemie Japan), BYK-378 (manufactured by BYK-Chemie Japan), BYK-UV3500 (manufactured by BYK-Chemie Japan), BYK-UV3505 (manufactured by BYK-Chemie Japan), BYK-UV3576 (manufactured by BYK-Chemie Japan), MEGAFACE (registered trademark) RS-75 (manufactured by DIC CORPORATION), MEGAFACE (registered trademark) RS-76-E (manufactured by DIC CORPORATION), MEGAFACE (registered trademark) RS-72-K (manufactured by DIC CORPORATION), MEGAFACE (registered trademark) RS-76-NS (manufactured by DIC CORPORATION), MEGAFACE (registered trademark) RS-90 (manufactured by DIC CORPORATION), MEGAFACE (registered trademark) RS-91 (manufactured by DIC CORPORATION), MEGAFACE (registered trademark) RS-55 (manufactured by DIC CORPORATION), OPTOOL (registered trademark) DAC-HP (manufactured by DAIKIN INDUSTRIES, LTD.), ZX-058-A (manufactured by T&K TOKA), ZX-201 (manufactured by T&K TOKA), ZX-202 (manufactured by T&K TOKA), ZX-212 (manufactured by T&K TOKA), ZX-214-A (manufactured by T&K TOKA), X-22-164AS (manufactured by Shin-Etsu Chemical **Co.,** Ltd.), X-22-164A (manufactured by Shin-Etsu Chemical Co., Ltd.), X-22-164B (manufactured by Shin-Etsu Chemical Co., Ltd.), X-22-164C (manufactured by Shin-Etsu Chemical Co., Ltd.), X-22-164E (manufactured by Shin-Etsu Chemical Co., Ltd.), and X-22-174DX (manufactured by Shin-Etsu Chemical Co., Ltd.).

The composition of the present invention may be applied to at least one side of a substrate made of any of various materials and may be irradiated with an active energy ray. The resultant cured film can be suitably used as a film that imparts antifogging properties to the substrate. A cured film made from the composition of the present invention has long-lasting antifogging properties. The composition of the present invention can form cured films and cured products that excel in abrasion resistance, bleed resistance, adhesion, and damp heat resistance. The cured films can withstand hot and humid environments and frequent contacts with people and objects, and exhibit excellent antifogging properties, thus finding suitable use as antifogging films in automobile applications, display applications, residential interiors, and the like.

### <Cured products and laminates>

### (Configurations and materials)

A cured product of the present invention is obtained by irradiating the active energy ray-curable antifogging coating composition of the present invention with an active energy ray. When the cured product is in the form of film, the product is a cured film.

A laminate of the present invention includes at least a substrate and the cured film.

The substrate is not particularly limited and may be selected appropriately in accordance with use application. Examples include plastics, glass, wood, metals, metal oxides, paper, silicon, and modified silicons. Dissimilar materials may be joined to form a substrate.

The shape of the substrate is not particularly limited and any shape may be adopted in accordance with the purpose, such as a flat plate shape, a sheet shape, or a three-dimensional shape having a curvature on the entire surface or part of the surface. Other configurations, such as hardness and thickness, of the substrate are not limited.

The plastic substrate is not particularly limited as long as it is made of a resin. For example, the thermosetting resins or the thermoplastic resins described hereinabove may be used. The substrate may include a single resin or a combination of resins, and may have a monolayer structure or a bilayer or multilayer structure. Furthermore, the plastic substrate may be fiber-reinforced (FRP).

Furthermore, the substrate may include known additives as long as the advantageous effects of the present invention are not impaired. Examples of such additives include antistatic agents, antifogging agents, antiblocking agents, UV absorbers, antioxidants, pigments, organic fillers, inorganic fillers, light stabilizers, crystal nucleating agents, and lubricants.

The laminate of the present invention may further have a second substrate on the substrate and the cured film. The material of the second substrate is not particularly limited. Examples include glass, wood, metals, metal oxides, plastics, paper, silicon, and modified silicons. Dissimilar materials may be joined to form a substrate. The shape of the substrate is not particularly limited and any shape may be adopted in accordance with the purpose, such as a flat plate shape, a sheet shape, or a three-dimensional shape having a curvature on the entire surface or part of the surface. Other configurations, such as hardness and thickness, of the substrate are not limited.

The cured film made from the composition of the present invention exhibits high adhesion with respect to plastics and to inorganic materials and can therefore be suitably used as an interlayer material between dissimilar materials. A particular benefit can be obtained when the substrate is a plastic and the second substrate is an inorganic layer. Examples of the inorganic layers include quartz, sapphire, glass, optical films, ceramic materials, inorganic oxides, vapor deposited films (CVD, PVD, sputtered), magnetic films, reflective films, metals, such as Ni, Cu, Cr, Fe, and stainless steel, paper, SOG (spin on glass), SOC (spin on carbon), plastic layers, such as polyesters, polycarbonates, and polyimides, TFT array substrates, PDP electrode plates, conductive substrates, such as ITO and metals, insulating substrates, and silicon-based substrates, such as silicon, silicon nitride, polysilicon, silicon oxide, and amorphous silicon.

### (Production methods)

The laminate of the present invention may be obtained by applying the active energy ray-curable antifogging coating composition of the present invention to at least one side of a substrate made of any of various materials, and irradiating the composition with an active energy ray.

The composition may be applied directly to the substrate or may be directly formed and cured and then be stacked onto the substrate.

In direct application, the composition may be applied by any method without limitation. Exemplary methods include spraying, spin coating, dipping, roll coating, blade coating, doctor roll coating, doctor blade coating, curtain coating, slit coating, screen printing, and inkjetting.

Alternatively, the composition of the present invention may be directly formed into a cured film and then be stacked onto a substrate made of any of various materials. A semicured product may be stacked onto the substrate and then be cured completely, or a completely cured product may be stacked onto the substrate. For example, a cured film may be directly formed by in-mold molding, insert molding, vacuum forming, extrusion lamination, or press molding.

The composition of the present invention can be cured by irradiation with an active energy ray by virtue of its containing a compound having a polymerizable unsaturated group.

Examples of the active energy rays include UV light and ionizing radiations, such as electron beams, α rays, β rays, and y rays. Among these, ultraviolet (UV) light is particularly preferable in view of curability and convenience.

When UV light is used as the active energy ray, examples of UV application devices include low-pressure mercury lamps, high-pressure mercury lamps, ultrahigh-pressure mercury lamps, metal halide lamps, electrodeless lamps (fusion lamps), chemical lamps, black light lamps, mercury-xenon lamps, short arc lamps, helium-cadmium lasers, argon lasers, sunlight, and LED lamps. A cured film or a cured product may be obtained by irradiating the composition that has been applied or formed, with UV light having a wavelength of about 180 to 400 nm using any of the devices described above. The irradiation dose of UV light is selected appropriately depending on the type and the amount of the photopolymerization initiator used.

The composition of the present invention may be subjected to a heating step before being cured with an active energy ray. By the introduction of the heating step, the solvent contained in the composition can be dried and the adhesion to the substrate can be enhanced.

Examples of the heating devices include hot air dryers, IR heating dryers, and heating hot plates. When the substrate is plastic, the adhesion to the substrate can be enhanced by performing the heating at 50°C to 110°C, preferably at 70°C to 100°C. When the substrate is an inorganic substrate, such as glass or a steel sheet, the adhesion to the substrate can be enhanced by performing the heating at 80°C to 140°C, preferably at 90 to 130°C, more preferably at 100 to 120°C.

### (Use applications)

The active energy ray-curable antifogging coating composition of the present invention can form cured films and cured products that have long-lasting antifogging properties and excel in abrasion resistance, bleed resistance, adhesion, and damp heat resistance. Thus, the composition can be suitably used in, for example, shatterproof glass films for automobiles, antifogging films for showcases, antifogging films for window glass, automobile headlamps, virtual reality (VR) displays, surveillance cameras, vanity mirrors, sinks, bathtubs, bathroom walls, and bathroom mirrors. Suitable use applications further include eyeglasses, goggles, face shields, various mirrors, various windows, anti-infection partitions, monitor covers, and sensor covers.

### EXAMPLES

Hereinbelow, the present invention will be described in greater detail by way of Examples and Comparative Examples. However, the present invention is not limited to the embodiments described below. In Examples, "parts" and "%" are on mass basis unless otherwise specified.

### (Synthesis Example 1: Synthesis of a polyfunctional (meth)acrylate compound (F-1) having a polyethylene glycol structure)

A three-liter flask equipped with a stirrer, a gas inlet tube, a condenser, and a thermometer was charged with 168.2 parts by mass of hexamethylene diisocyanate ("DESMODUR H" manufactured by Covestro AG), 256 parts by mass of isobutyl acetate, 2.0 parts by mass of 2,6-di-tert-butyl-4-methylphenol, 0.2 parts by mass of methoxyhydroquinone, and 0.2 parts by mass of dibutyltin diacetate. The temperature was raised to 70°C. Pentaerythritol triacrylate (product name "ARONIX M-306" manufactured by TOAGOSEI CO., LTD., containing approximately 30 mass% of pentaerythritol tetraacrylate) (356.9 parts by mass) and polyethylene glycol ("PEG-1000" manufactured by Sanyo Chemical Industries, Ltd., number average molecular weight: approximately 1000) (496.5 parts by mass) were added in portions over a period of 1 hour. After the materials were charged, the reaction was carried out at 80°C until a peak at 2250 cm⁻¹ assigned to the isocyanate groups in an infrared absorption spectrum disappeared. Thus, a polyfunctional (meth)acrylate compound (F-1) having a polyethylene glycol structure (containing approximately 10.5 mass% of pentaerythritol tetraacrylate in the solid) was obtained with a solid content of 80 wt%.

### (Synthesis Example 2: Synthesis of a polyfunctional (meth)acrylate compound (F-2) having a polyethylene glycol structure)

The procedure of Synthesis Example 1 was repeated, except that 168.2 parts by mass of hexamethylene diisocyanate was replaced by 222.3 parts by mass of isophorone diisocyanate (product name "IPDI" manufactured by Covestro AG). Thus, a polyfunctional (meth)acrylate compound (F-2) having a polyethylene glycol structure (containing approximately 10 mass% of pentaerythritol tetraacrylate in the solid) was obtained.

### (Synthesis Example 3: Synthesis of a polyfunctional (meth)acrylate compound (F-3) having a polyethylene glycol structure)

A one-liter flask equipped with a stirrer, a gas inlet tube, a condenser, and a thermometer was charged with 193.8 parts by mass of isocyanurate-type hexamethylene diisocyanate ("DURANATE N3300" manufactured by Asahi Kasei Corporation), 109.4 parts by mass of isobutyl acetate, 0.9 parts by mass of 2,6-di-tert-butyl-4-methylphenol, 0.09 parts by mass of methoxyhydroquinone, and 0.09 parts by mass of dibutyltin diacetate. The temperature was raised to 70°C. 77.4 Parts by mass of 2-hydroxyethyl monoacrylate (product name "HEA" manufactured by OSAKA ORGANIC CHEMICAL INDUSTRY LTD.) and 165.5 parts by mass of polyethylene glycol ("PEG-1000" manufactured by Sanyo Chemical Industries, Ltd., number average molecular weight: approximately 1000) were added in portions over a period of 1 hour. After the materials were charged, the reaction was carried out at 80°C until a peak at 2250 cm⁻¹ assigned to the isocyanate groups in an infrared absorption spectrum disappeared. Thus, a polyfunctional (meth)acrylate compound (F-3) having a polyethylene glycol structure was obtained with a solid content of 80 wt%.

### (Synthesis Example 4: Synthesis of a polyfunctional (meth)acrylate compound (F-4) having a polyethylene glycol structure)

The procedure of Synthesis Example 3 was repeated, except that 2-hydroxyethyl monoacrylate was replaced by 237.9 parts by mass of pentaerythritol triacrylate (product name "ARONIX M-306" manufactured by TOAGOSEI CO., LTD., containing approximately 30 mass% of pentaerythritol tetraacrylate). Thus, a polyfunctional (meth)acrylate compound (F-4) having a polyethylene glycol structure (containing approximately 12.0 mass% of pentaerythritol tetraacrylate in the solid) was obtained with a solid content of 80 wt%.

### (Synthesis Example 5: Synthesis of a polyfunctional (meth)acrylate compound (F-5) having a polyethylene glycol structure)

The procedure of Synthesis Example 3 was repeated, except that the polyethylene glycol was changed from 165.5 parts by mass of "PEG-1000" manufactured by Sanyo Chemical Industries, Ltd. (number average molecular weight: approximately 1000) to 32.9 parts by mass of "PEG-200" manufactured by Sanyo Chemical Industries, Ltd. (number average molecular weight: approximately 200). Thus, a polyfunctional (meth)acrylate compound (F-5) having a polyethylene glycol structure was obtained with a solid content of 80 wt%.

### (Synthesis Example 6: Synthesis of a polyfunctional (meth)acrylate compound (F-6) having a polyethylene glycol structure)

The procedure of Synthesis Example 3 was repeated, except that the polyethylene glycol was changed from 165.5 parts by mass of "PEG-1000" manufactured by Sanyo Chemical Industries, Ltd. (number average molecular weight: approximately 1000) to 97.4 parts by mass of "PEG-600" manufactured by Sanyo Chemical Industries, Ltd. (number average molecular weight: approximately 600). Thus, a polyfunctional (meth)acrylate compound (F-6) having a polyethylene glycol structure was obtained with a solid content of 80 wt%.

### (Synthesis Example 7: Synthesis of a polyfunctional (meth)acrylate compound (F-7) having a polyethylene glycol structure)

The procedure of Synthesis Example 3 was repeated, except that the polyethylene glycol was changed from 165.5 parts by mass of "PEG-1000" manufactured by Sanyo Chemical Industries, Ltd. (number average molecular weight: approximately 1000) to 333.2 parts by mass of "PEG-2000" manufactured by Sanyo Chemical Industries, Ltd. (number average molecular weight: approximately 2000). Thus, a polyfunctional (meth)acrylate compound (F-7) having a polyethylene glycol structure was obtained with a solid content of 80 wt%.

### (Synthesis Example 8: Synthesis of a polyfunctional (meth)acrylate compound (F-8) having a polyethylene glycol structure)

The procedure of Synthesis Example 3 was repeated, except that the polyethylene glycol was changed from 165.5 parts by mass of "PEG-1000" manufactured by Sanyo Chemical Industries, Ltd. (number average molecular weight: approximately 1000) to 663.1 parts by mass of "PEG-4000" manufactured by Sanyo Chemical Industries, Ltd. (number average molecular weight: approximately 4000). Thus, a polyfunctional (meth)acrylate compound (F-8) having a polyethylene glycol structure was obtained with a solid content of 80 wt%.

### (Example 1)

As solid materials, 100 parts by mass of trimethylolpropane EO-modified triacrylate (number of modification units: 3, average number of EO modification: 1, "MIRAMER M3130" manufactured by Miwon Specialty Chemical Co., Ltd.), 0.5 parts by mass of sodium alkylbenzenesulfonate (product name "Lipon LH-200" manufactured by LION SPECIALTY CHEMICALS CO., LTD.), and 3 parts by mass of photopolymerization initiators (1.5 parts by mass of Omnirad 2959 (manufactured by IGM Resins B.V.), 1.5 parts by mass of Omnirad 819 (manufactured by IGM Resins B.V.) were provided. These materials were uniformly mixed together in propylene glycol monomethyl ether so that the solid content would be 40 wt%. An active energy ray-curable antifogging coating composition (1) was thus prepared.

### (Examples 2 to 83 and Comparative Examples 1 and 2)

Active energy ray-curable antifogging coating compositions (2) to (83), (R1), and (R2) of respective examples were obtained in the same manner as in Example 1, except that the formulation of the solid materials was changed as described in Tables 2 to 13.

### [Fabrication of evaluation samples (PET substrates)]

The active energy ray-curable antifogging coating compositions (1) to (22), (62) to (81), (R1), and (R2) of respective examples were each applied to a polyethylene terephthalate (PET) substrate (product name "LUMIRROR UH-13" manufactured by TORAY INDUSTRIES, INC., thickness: 50 µm, area: 30 cm × 15 cm) so that the film thickness would be 5 µm. The coating was dried at 80°C for 1 minute and was UV-irradiated at 180 mW/cm² and 250 mJ/cm² with a high-pressure mercury lamp. The thus-obtained laminates of the PET substrate and the cured film were used as evaluation samples (PET substrates).

### [Fabrication of evaluation samples (glass substrates)]

The active energy ray-curable antifogging coating compositions (23) to (61) of respective examples were each applied to a glass substrate (float glass manufactured by PALTEK CORPORATION, thickness: 3 mm, area: 15 cm × 7 cm) so that the film thickness would be 5 µm. The coating was dried at 100°C for 10 minutes and was UV-irradiated at 200 mW/cm² and 1000 mJ/cm² with a high-pressure mercury lamp. The thus-obtained laminates of the glass substrate and the cured film were used as evaluation samples (glass substrates).

### [Evaluation of initial antifogging properties]

The evaluation samples (PET substrates) and the evaluation samples (glass substrates) obtained above were placed at a height of 2 cm from the surface of a hot water bath kept at 50°C so that the cured films would face downward. The films were continuously exposed to steam from the hot water bath for 60 seconds, and the presence or absence of fogging was visually evaluated on the following three scales.
⊚: A water film formed immediately after steaming and the film was not fogged.
∘: The film was fogged for a very short period of time immediately after steaming, but a water film formed soon and the fogging was cleared.
×: A beautiful water film did not form after steaming and the film was fogged.

### [Evaluation of antifogging durability]

After the above [Evaluation of initial antifogging properties], the water film was wiped off with a rag, and the samples were subjected again to the procedure of [Evaluation of initial antifogging properties] The number of cycles was measured until the cured film no longer allowed a water film to form. For example, the number of cycles is 2 when the formation of a water film fails after the [Evaluation of initial antifogging properties] is completed three times in total. The antifogging durability was acceptable when the number of cycles was 2 or more.

### [Evaluation of bleed resistance after a damp heat test]

The evaluation samples (PET substrates) and the evaluation samples (glass substrates) obtained above were allowed to stand under conditions of 50°C and 95% RH. The presence or absence of bleeding was checked every 25 hours to measure the time to the occurrence of bleeding. The bleed resistance was acceptable when there was no bleeding after 25 hours.

### [Evaluation of abrasion resistance]

The evaluation samples of respective examples were subjected to an abrasion test in which the surface of the cured film was rubbed with a clean rag under a load of 600 g/cm² at 30 rpm. The number of reciprocating rubbing that caused visible scratches was recorded. The abrasion resistance was acceptable when the cured film was free from scratches after 100 times of reciprocating rubbing.

### [Evaluation of adhesion to substrates]

The evaluation samples (PET substrates) and the evaluation samples (glass substrates) were each cross-cut on the cured film side with a cutter to create a 10 × 10 grid pattern at 1 mm intervals. Cellophane tape ("CT-24" manufactured by NICHIBAN CO., LTD.) was applied to the grid-patterned area and was peeled off. The samples were checked for the presence or absence of separation.

### [Evaluation of adhesion to substrates after a damp heat test]

The test pieces were allowed to stand at 50°C and 95% RH for 25 hours, and the resistance to separation of the cured films was tested in accordance with JIS K 5600-5-6. The test was discontinued upon the occurrence of separation. When separation did not occur, the test piece was allowed to stand under the same conditions for 25 hours and was tested again in the same manner. This procedure was repeated until separation occurred. The time until separation occurred was measured.

The formulations and the evaluation results of the active energy ray-curable antifogging coating compositions (1) to (83) obtained in Examples 1 to 83, and the active energy ray-curable antifogging coating compositions (R1) and (R2) obtained in Comparative Examples 1 and 2 are described in Tables 1 to 13.

**[Table 1]**

| | Compounds | | Number of C=C | Number of EO | EO/C=C | Ex. 1 | Ex. 2 | Ex. 3 | Ex. 4 | Ex. 5 | Ex. 6 | Ex. 7 |
|---|---|---|---|---|---|---|---|---|---|---|---|---|
| | Compounds (3) | M3130 | 3.0 | 3.0 | 1.0 | 100 | | | | | | |
| | | M3160 | 3.0 | 6.0 | 2.0 | | 100 | | | | | |
| | | M3190 | 3.0 | 9.0 | 3.0 | | | 100 | | | | |
| | | M3150 | 3.0 | 150 | 5.0 | | | | 100 | | | |
| Components (A) | | SR415 | 3.0 | 20.0 | 6.7 | | | | | | | |
| | Compounds (2) | A-DPH-6E | 6.0 | 6.0 | 1.0 | | | | | 100 | | |
| | | A-DPH-12E | 6.0 | 12.0 | 2.0 | | | | | | 100 | |
| | | A-DPH-24E | 6.0 | 24.0 | 4.0 | | | | | | | 100 |
| | | DPEA42 | 6.0 | 42.0 | 7.0 | | | | | | | |
| Components (B) | Alkylbenzenesulfonate salt | | | | | 0.5 | 0.5 | 0.5 | 0.5 | 0.5 | 0.5 | 0.5 |
| | OT-100 | | | | | | | | | | | |
| Type of substrate | | | | | | PET | PET | PET | PET | PET | PET | PET |
| Initial antifogging properties | | | | | | ○ | ○ | ○ | ○ | ○ | ○ | ○ |
| Antifogging durability | | | | | | 2 | 2 | 2 | 2 | 2 | 2 | 2 |
| Bleed resistance after damp heat test | | | | | | 150 | 150 | 150 | 150 | 150 | 150 | 150 |
| Abrasion resistance | | | | | | 300 | 300 | 300 | 200 | 300 | 300 | 200 |
| Adhesion to substrate | | | | | | ○ | ○ | ○ | ○ | ○ | ○ | ○ |
| Adhesion to substrate after damp heat test | | | | | | 500 | 500 | 500 | 500 | 500 | 500 | 500 |

**[Table 2]**

| | Compounds | | Number of C=C | Number of EO | EO/C=C | Ex. 8 | Ex. 9 | Ex. 10 | Ex. 11 | Ex. 12 | Ex. 13 | Ex. 14 |
|---|---|---|---|---|---|---|---|---|---|---|---|---|
| | Compounds (3) | M3130 | 3.0 | 3.0 | 1.0 | | | | | | | |
| | | M3160 | 3.0 | 6.0 | 2.0 | | | | | | | |
| | | M3190 | 3.0 | 9.0 | 3.0 | 100 | 100 | 100 | 100 | 100 | 100 | 100 |
| | | M3150 | 3.0 | 15.0 | 5.0 | | | | | | | |
| Components (A) | | SR415 | 3.0 | 20.0 | 6.7 | | | | | | | |
| | Compounds (2) | A-DPH-6E | 6.0 | 6.0 | 1.0 | | | | | | | |
| | | A-DPH-12E | 6.0 | 12.0 | 2.0 | | | | | | | |
| | | A-DPH-24E | 6.0 | 24.0 | 4.0 | | | | | | | |
| | | DPEA42 | 6.0 | 42.0 | 7.0 | | | | | | | |
| Components (B) | Alkylbenzenesulfonate salt | | | | | | | | | | | |
| | OT-100 | | | | | 0.5 | 0.75 | 1 | 2 | 3 | 4 | 5 |
| Type of substrate | | | | | | PET | PET | PET | PET | PET | PET | PET |
| Initial antifogging properties | | | | | | ○ | ⊚ | ⊚ | ⊚ | ⊚ | ⊚ | ⊚ |
| Antifogging durability | | | | | | 5 | 7 | 15 | 15 | 15 | 25 | 28 |
| Bleed resistance after damp heat test | | | | | | 150 | 150 | 150 | 150 | 150 | 100 | 100 |
| Abrasion resistance | | | | | | 300 | 300 | 300 | 300 | 300 | 300 | 300 |
| Adhesion to substrate | | | | | | ○ | ○ | ○ | ○ | ○ | ○ | ○ |
| Adhesion to substrate after damp heat test | | | | | | 500 | 500 | 500 | 500 | 500 | 400 | 300 |

**[Table 3]**

| | Compounds | | Number of C=C | Number of EO | EO/C=C | Ex. 15 | Ex. 16 | Ex. 17 | Ex. 18 | Ex. 19 | Ex. 20 |
|---|---|---|---|---|---|---|---|---|---|---|---|
| Components (A) | Compounds (3) | M3130 | 3.0 | 3.0 | 1.0 | | | | | | |
| | | M3160 | 3.0 | 6.0 | 2.0 | | | | | | |
| | | M3190 | 3.0 | 9.0 | 3.0 | 100 | 100 | 100 | 100 | 100 | 100 |
| Components (B) | Alkylbenzenesulfonate salt | | | | | | | | | | |
| | OT-100 | | | | | | 1 | 1 | 1 | 1 | 1 |
| | 12W-37 | | | | | | 0.01 | 0.03 | 0.05 | 0.1 | 0.2 |
| | TM-16 | | | | | | | | | | |
| | TM-18 | | | | | | | | | | |
| | 2C-75 | | | | | | | | | | |
| | DSV | | | | | | | | | | |
| | NL110 | | | | | 2 | | | | | |
| Type of substrate | | | | | | PET | PET | PET | PET | PET | PET |
| Initial antifogging properties | | | | | | ⊚ | ⊚ | ⊚ | ⊚ | ⊚ | ⊚ |
| Antifogging durability | | | | | | 5 | 20 | 25 | 25 | 25 | 25 |
| Bleed resistance after damp heat test | | | | | | 50 | 250 | 250 | 250 | 250 | 200 |
| Abrasion resistance | | | | | | 300 | 300 | 300 | 300 | 300 | 300 |
| Adhesion to substrate | | | | | | ○ | ○ | ○ | ○ | ○ | ○ |
| Adhesion to substrate after damp heat test | | | | | | 300 | 500 | 500 | 500 | 500 | 500 |

**[Table 4]**

| | Compounds | | Number of C=C | Number of EO | EO/C=C | Ex. 21 | Ex. 22 | Ex. 23 | Ex. 24 |
|---|---|---|---|---|---|---|---|---|---|
| Components (A) | Compounds (3) | M3130 | 3.0 | 3.0 | 1.0 | | | | |
| | | M3160 | 3.0 | 6.0 | 2.0 | | | | |
| | | M3190 | 3.0 | 9.0 | 3.0 | 100 | 100 | 100 | 100 |
| Components (B) | Alkylbenzenesulfonate salt | | | | | | | | |
| | OT-100 | | | | | 1 | 1 | 1 | 1 |
| | 12W-37 | | | | | | | | |
| | TM-16 | | | | | 0.05 | | | |
| | TM-18 | | | | | | 0.05 | | |
| | 2C-75 | | | | | | | 0.05 | |
| | DSV | | | | | | | | 0.05 |
| | NL110 | | | | | | | | |
| Type of substrate | | | | | | PET | PET | PET | PET |
| Initial antifogging properties | | | | | | ⊚ | ⊚ | ⊚ | ⊚ |
| Antifogging durability | | | | | | 25 | 25 | 25 | 25 |
| Bleed resistance after damp heat test | | | | | | 250 | 250 | 250 | 200 |
| Abrasion resistance | | | | | | 300 | 300 | 300 | 300 |
| Adhesion to substrate | | | | | | ○ | ○ | ○ | ○ |
| Adhesion to substrate after damp heat test | | | | | | 500 | 500 | 500 | 500 |

**[Table 5]**

| | Compounds | | Number of C=C | Number of EO | EO/C=C | Ex. 25 | Ex. 26 | Ex. 27 | Ex. 28 | Ex. 29 | Ex. 30 | Ex. 31 |
|---|---|---|---|---|---|---|---|---|---|---|---|---|
| Components (A) | Compounds (3) | M3130 | 3.0 | 3.0 | 1.0 | 99 | 95 | 90 | 80 | 70 | 60 | 50 |
| Components (B) | Alkylbenzenesulfonate salt | | | | | | | | | | | |
| | OT-100 | | | | | 1 | 1 | 1 | 1 | 1 | 1 | 1 |
| | 12W-37 | | | | | | | | | | | |
| | TM-16 | | | | | 0.05 | 0.05 | 0.05 | 0.05 | 0.05 | 0.05 | 0.05 |
| | TM-18 | | | | | | | | | | | |
| | 2C-75 | | | | | | | | | | | |
| | DSV | | | | | | | | | | | |
| | NL110 | | | | | | | | | | | |
| Components (C) | AA | | 1 | 0 | | 0.5 | 2.5 | 5 | 10 | 15 | 20 | 25 |
| | HOA-MS | | 1 | 0 | | | | | | | | |
| | ACB-3 | | 1 | 0 | | | | | | | | |
| Components (D) | KBM-503 | | 1 | 0 | | | | | | | | |
| | KBM-5103 | | 1 | 0 | | 0.5 | 2.5 | 5 | 10 | 15 | 20 | 25 |
| | KBM-5803 | | 1 | 0 | | | | | | | | |
| Type of substrate | | | | | | Glass | Glass | Glass | Glass | Glass | Glass | Glass |
| Initial antifogging properties | | | | | | ⊚ | ⊚ | ⊚ | ⊚ | ⊚ | ⊚ | ⊚ |
| Antifogging durability | | | | | | 25 | 25 | 25 | 25 | 25 | 25 | 25 |
| Bleed resistance after damp heat test | | | | | | 250 | 250 | 250 | 250 | 250 | 250 | 250 |
| Abrasion resistance | | | | | | 300 | 300 | 300 | 300 | 300 | 200 | 100 |
| Adhesion to substrate | | | | | | ○ | ○ | ○ | ○ | ○ | ○ | ○ |
| Adhesion to substrate after damp heat test | | | | | | 100 | 200 | 250 | 250 | 250 | 250 | 250 |

**[Table 6]**

| | Compounds | | Number of C=C | Number of EO | EO/C=C | Ex. 32 | Ex. 33 | Ex. 34 | Ex. 35 | Ex. 36 | Ex. 37 | Ex. 38 |
|---|---|---|---|---|---|---|---|---|---|---|---|---|
| Components (A) | Compounds (3) | M3130 | 3.0 | 3.0 | 1.0 | 60 | 60 | 60 | 60 | 70 | 70 | 70 |
| Components (B) | Alkylbenzenesulfonate salt | | | | | | | | | | | |
| | OT-100 | | | | | 1 | 1 | 1 | 1 | 1 | 1 | 1 |
| | 12W-37 | | | | | | | | | | | |
| | TM-16 | | | | | 0.05 | 0.05 | 0.05 | 0.05 | 0.05 | 0.05 | 0.05 |
| | TM-18 | | | | | | | | | | | |
| | 2C-75 | | | | | | | | | | | |
| | DSV | | | | | | | | | | | |
| | NL110 | | | | | | | | | | | |
| Components (C) | AA | | 1 | 0 | | 35 | 30 | 10 | 5 | | | |
| | HOA-MS | | 1 | 0 | | | | | | 15 | | 15 |
| | ACB-3 | | 1 | 0 | | | | | | | 15 | |
| Components (D) | KBM-503 | | 1 | 0 | | | | | | | | |
| | KBM-5103 | | 1 | 0 | | 5 | 10 | 30 | 35 | 15 | 15 | |
| | KBM-5803 | | 1 | 0 | | | | | | | | 15 |
| Type of substrate | | | | | | Glass | Glass | Glass | Glass | Glass | Glass | Glass |
| Initial antifogging properties | | | | | | ⊚ | ⊚ | ⊚ | ⊚ | ⊚ | ⊚ | ⊚ |
| Antifogging durability | | | | | | 25 | 25 | 25 | 25 | 25 | 25 | 25 |
| Bleed resistance after damp heat test | | | | | | 250 | 250 | 250 | 250 | 250 | 250 | 250 |
| Abrasion resistance | | | | | | 200 | 200 | 200 | 200 | 300 | 300 | 300 |
| Adhesion to substrate | | | | | | ○ | ○ | ○ | ○ | ○ | ○ | ○ |
| Adhesion to substrate after damp heat test | | | | | | 200 | 250 | 250 | 200 | 300 | 300 | 300 |

**[Table 7]**

| | Compounds | | Number of C=C | Number of EO | EO/C=C | Ex. 39 | Ex. 40 | Ex. 41 | Ex. 42 | Ex. 43 | Ex. 44 |
|---|---|---|---|---|---|---|---|---|---|---|---|
| Components (A) | Compounds (3) | M3130 | 3.0 | 3.0 | 1.0 | 63 | 49 | 35 | 21 | 7 | 3.5 |
| Components (B) | Alkylbenzenesulfonate salt | | | | | | | | | | |
| | OT-100 | | | | | 1 | 1 | 1 | 1 | 1 | 1 |
| | 12W-37 | | | | | | | | | | |
| | TM-16 | | | | | 0.05 | 0.05 | 0.05 | 0.05 | 0.05 | 0.05 |
| Components (C) | AA | | 1 | 0 | | | | | | | |
| | HOA-MS | | 1 | 0 | | 15 | 15 | 15 | 15 | 15 | 15 |
| | ACB-3 | | 1 | 0 | | | | | | | |
| Components (D) | KBM-503 | | 1 | 0 | | | | | | | |
| | KBM-5103 | | 1 | 0 | | | | | | | |
| | KBM-5803 | | 1 | 0 | | 15 | 15 | 15 | 15 | 15 | 15 |
| Components (E) | TEMPTA | | 3 | 0 | | | | | | | |
| | PETA | | 4 | 0 | | | | | | | |
| | DPHA | | 5 | 0 | | 7 | 21 | 35 | 49 | 63 | 66.5 |
| Type of substrate | | | | | | Glass | Glass | Glass | Glass | Glass | Glass |
| Initial antifogging properties | | | | | | ⊚ | ⊚ | ⊚ | ⊚ | ⊚ | ⊚ |
| Antifogging durability | | | | | | 25 | 25 | 25 | 25 | 25 | 19 |
| Bleed resistance after damp heat test | | | | | | 300 | 350 | 350 | 350 | 350 | 300 |
| Abrasion resistance | | | | | | 400 | 500 | 500 | 500 | 500 | 400 |
| Adhesion to substrate | | | | | | ○ | ○ | ○ | ○ | ○ | ○ |
| Adhesion to substrate after damp heat test | | | | | | 400 | 500 | 500 | 500 | 500 | 400 |

**[Table 8]**

| | Compounds | | | Number of C=C | Number of EO | EO/C=C | Ex. 45 | Ex. 46 | Ex. 47 | Ex. 48 | Ex. 49 | Ex. 50 |
|---|---|---|---|---|---|---|---|---|---|---|---|---|
| Components (A) | Compounds (3) | M3130 | | 3.0 | 3.0 | 1.0 | 1 | 2 | 3 | 42 | 49 | 56 |
| Components (B) | Alkylbenzenesulfonate salt | | | | | | | | | | | |
| | OT-100 | | | | | | 1 | 1 | 1 | 1 | 1 | 1 |
| | 12W-37 | | | | | | | | | | | |
| | TM-16 | | | | | | 0.05 | 0.05 | 0.05 | 0.05 | 0.05 | 0.05 |
| Components (C) | AA | | | 1 | 0 | | | | | | | |
| | HOA-MS | | | 1 | 0 | | 5 | 5 | 5 | 5 | 5 | 5 |
| | ACB-3 | | | 1 | 0 | | | | | | | |
| Components (D) | KBM-503 | | | 1 | 0 | | | | | | | |
| | KBM-5103 | | | 1 | 0 | | | | | | | |
| | KBM-5803 | | | 1 | 0 | | 5 | 5 | 5 | 5 | 5 | 5 |
| Components (E) | TEMPTA | | | 3 | 0 | | | | | | | |
| | PETA | | | 4 | 0 | | | | | | | |
| | DPHA | | | 5 | 0 | | 9 | 18 | 27 | 18 | 21 | 24 |
| Component (F) | PETA | HDI | PEG1000 | 6 | Present | | 80 | 70 | 60 | 30 | 20 | 10 |
| Type of substrate | | | | | | | Glass | Glass | Glass | Glass | Glass | Glass |
| Initial antifogging properties | | | | | | | ⊚ | ⊚ | ⊚ | ⊚ | ⊚ | ⊚ |
| Antifogging durability | | | | | | | 28 | 32 | 35 | 35 | 32 | 27 |
| Bleed resistance after damp heat test | | | | | | | 450 | 500 | 500 | 500 | 500 | 400 |
| Abrasion resistance | | | | | | | 500 | 500 | 500 | 500 | 500 | 500 |
| Adhesion to substrate | | | | | | | ○ | ○ | ○ | ○ | ○ | ○ |
| Adhesion to substrate after damp heat test | | | | | | | 500 | 500 | 500 | 500 | 500 | 500 |

**[Table 9]**

| | Compounds | | | Number of C=C | Number of EO | EO/C=C | Ex. 51 | Ex. 52 | Ex. 53 | Ex. 54 | Ex. 55 | Ex. 56 |
|---|---|---|---|---|---|---|---|---|---|---|---|---|
| Components (A) | Compounds (3) | M3130 | | 3.0 | 3.0 | 1.0 | 1 | 2 | 3 | 28 | 35 | 42 |
| Components (B) | Alkylbenzenesulfonate salt | | | | | | | | | | | |
| | OT-100 | | | | | | 1 | 1 | 1 | 1 | 1 | 1 |
| | 12W-37 | | | | | | | | | | | |
| | TM-16 | | | | | | 0.05 | 0.05 | 0.05 | 0.05 | 0.05 | 0.05 |
| Components (C) | AA | | | 1 | 0 | | | | | | | |
| | HOA-MS | | | 1 | 0 | | 15 | 15 | 15 | 15 | 15 | 15 |
| | ACB-3 | | | 1 | 0 | | | | | | | |
| Components (D) | KBM-503 | | | 1 | 0 | | | | | | | |
| | KBM-5103 | | | 1 | 0 | | | | | | | |
| | KBM-5803 | | | 1 | 0 | | 15 | 15 | 15 | 15 | 15 | 15 |
| Components (E) | TEMPTA | | | 3 | 0 | | | | | | | |
| | PETA | | | 4 | 0 | | | | | | | |
| | DPHA | | | 5 | 0 | | 9 | 18 | 27 | 12 | 15 | 18 |
| Component (F) | PETA | HDI | PEG1000 | 6 | Present | | 60 | 50 | 40 | 30 | 20 | 10 |
| Type of substrate | | | | | | | Glass | Glass | Glass | Glass | Glass | Glass |
| Initial antifogging properties | | | | | | | ⊚ | ⊚ | ⊚ | ⊚ | ⊚ | ⊚ |
| Antifogging durability | | | | | | | 28 | 32 | 35 | 35 | 32 | 27 |
| Bleed resistance after damp heat test | | | | | | | 450 | 500 | 500 | 500 | 500 | 400 |
| Abrasion resistance | | | | | | | 500 | 500 | 500 | 500 | 500 | 500 |
| Adhesion to substrate | | | | | | | ○ | ○ | ○ | ○ | ○ | ○ |
| Adhesion to substrate after damp heat test | | | | | | | 500 | 500 | 500 | 500 | 500 | 500 |

**[Table 10]**

| | Compounds | | | Number of C=C | Number of EO | EO/C=C | Ex. 57 | Ex. 58 | Ex. 59 | Ex. 60 | Ex. 61 | Ex. 62 | Ex. 63 |
|---|---|---|---|---|---|---|---|---|---|---|---|---|---|
| Components (A) | Compounds (3) | M3130 | | 3.0 | 3.0 | 1.0 | 3 | 3 | 3 | 3 | 3 | 3 | 3 |
| Components (B) | Alkylbenzenesulfonate salt | | | | | | | | | | | | |
| | OT-100 | | | | | | 1 | 1 | 1 | 1 | 1 | 1 | 1 |
| | 12W-37 | | | | | | | | | | | | |
| | TM-16 | | | | | | 0.05 | 0.05 | 0.05 | 0.05 | 0.05 | 0.05 | 0.05 |
| Components (C) | AA | | | 1 | 0 | | | | | | | | |
| | HOA-MS | | | 1 | 0 | | 15 | 15 | 15 | 15 | 15 | 15 | 15 |
| | ACB-3 | | | 1 | 0 | | | | | | | | |
| Components (D) | KBM-503 | | | 1 | 0 | | | | | | | | |
| | KBM-5103 | | | 1 | 0 | | | | | | | | |
| | KBM-5803 | | | 1 | 0 | | 15 | 15 | 15 | 15 | 15 | 15 | 15 |
| Components (E) | TEMPTA | | | 3 | 0 | | | | | | | | |
| | PETA | | | 4 | 0 | | | | | | | | |
| | DPHA | | | 5 | 0 | | 27 | 27 | 27 | 27 | 27 | 27 | 27 |
| Components (F) | PETA | HDI | PEG1000 | 6 | Present | | | | | | | | |
| | | IPDI | PEG1000 | 6 | Present | | 40 | | | | | | |
| | HEA | HDI-N | PEG1000 | 4 | Present | | | 40 | | | | | |
| | PETA | | PEG1000 | 12 | Present | | | | 40 | | | | |
| | HEA | | PEG200 | 4 | Present | | | | | 40 | | | |
| | | | PEG600 | 4 | Present | | | | | | 40 | | |
| | | | PEG2000 | 4 | Present | | | | | | | 40 | |
| | | | PEG4000 | 4 | Present | | | | | | | | 40 |
| Type of substrate | | | | | | | Glass | Glass | Glass | Glass | Glass | Glass | Glass |
| Initial antifogging properties | | | | | | | ⊚ | ⊚ | ⊚ | ⊚ | ⊚ | ⊚ | ⊚ |
| Antifogging durability | | | | | | | 27 | 35 | 31 | 31 | 33 | 35 | 35 |
| Bleed resistance after damp heat test | | | | | | | 400 | 500 | 450 | 450 | 500 | 500 | 450 |
| Abrasion resistance | | | | | | | 400 | 500 | 500 | 500 | 500 | 500 | 500 |
| Adhesion to substrate | | | | | | | ○ | ○ | ○ | ○ | ○ | ○ | ○ |
| Adhesion to substrate after damp heat test | | | | | | | 500 | 500 | 500 | 500 | 500 | 500 | 500 |

**[Table 11]**

| | Compounds | | | Number of C=C | Number of EO | EO/C=C | Ex. 64 | Ex. 65 | Ex. 66 | Ex. 67 | Ex. 68 | Ex. 69 |
|---|---|---|---|---|---|---|---|---|---|---|---|---|
| Components (A) | Compounds (3) | M3130 | | 3.0 | 3.0 | 1.0 | 90 | 70 | 50 | 30 | 10 | 5 |
| Components (B) | Alkylbenzenesulfonate salt | | | | | | | | | | | |
| | OT-100 | | | | | | 1 | 1 | 1 | 1 | 1 | 1 |
| | 12W-37 | | | | | | | | | | | |
| | TM-16 | | | | | | | | | | | |
| | TM-18 | | | | | | 0.05 | 0.05 | 0.05 | 0.05 | 0.05 | 0.05 |
| | 2C-75 | | | | | | | | | | | |
| | DSV | | | | | | | | | | | |
| | NL110 | | | | | | | | | | | |
| Components (E) | TEMPTA | | | 3 | 0 | | | | | | | |
| | PETA | | | 4 | 0 | | | | | | | |
| | DPHA | | | 5 | 0 | | 10 | 30 | 50 | 70 | 90 | 95 |
| | PETA | HDI | | 6 | 0 | | | | | | | |
| | DPPA | HDI | | 10 | 0 | | | | | | | |
| Type of substrate | | | | | | | PET | PET | PET | PET | PET | PET |
| Initial antifogging properties | | | | | | | ⊚ | ⊚ | ⊚ | ⊚ | ⊚ | ⊚ |
| Antifogging durability | | | | | | | 25 | 25 | 25 | 25 | 25 | 19 |
| Bleed resistance after damp heat test | | | | | | | 300 | 350 | 350 | 350 | 350 | 300 |
| Abrasion resistance | | | | | | | 400 | 500 | 500 | 500 | 500 | 400 |
| Adhesion to substrate | | | | | | | ○ | ○ | ○ | ○ | ○ | ○ |
| Adhesion to substrate after damp heat test | | | | | | | 500 | 500 | 500 | 500 | 500 | 500 |

**[Table 12]**

| | Compounds | | | Number of C=C | Number of EO | EO/C=C | Ex. 70 | Ex. 71 | Ex. 72 | Ex. 73 | Ex. 74 | Ex. 75 | Ex. 76 |
|---|---|---|---|---|---|---|---|---|---|---|---|---|---|
| Components (A) | Compounds (3) | M3130 | | 3.0 | 3.0 | 1.0 | 1 | 2 | 3 | 25 | 49 | 56 | 63 |
| Components (B) | Alkylbenzenesulfonate salt | | | | | | | | | | | | |
| | OT-100 | | | | | | 1 | 1 | 1 | 1 | 1 | 1 | 1 |
| | 12W-37 | | | | | | | | | | | | |
| | TM-16 | | | | | | | | | | | | |
| | TM-18 | | | | | | 0.05 | 0.05 | 0.05 | 0.05 | 0.05 | 0.05 | 0.05 |
| | 2C-75 | | | | | | | | | | | | |
| | DSV | | | | | | | | | | | | |
| | NL110 | | | | | | | | | | | | |
| Components (E) | TEMPTA | | | 3 | 0 | | | | | | | | |
| | PETA | | | 4 | 0 | | | | | | | | |
| | DPHA | | | 5 | 0 | | 9 | 18 | 27 | 25 | 21 | 24 | 27 |
| | PETA | HDI | | 6 | 0 | | | | | | | | |
| | DPPA | HDI | | 10 | 0 | | | | | | | | |
| Component (F) | PETA | HDI | PEG1000 | 6 | Present | | 90 | 80 | 70 | 50 | 30 | 20 | 10 |
| Type of substrate | | | | | | | PET | PET | PET | PET | PET | PET | PET |
| Initial antifogging properties | | | | | | | ⊚ | ⊚ | ⊚ | ⊚ | ⊚ | ⊚ | ⊚ |
| Antifogging durability | | | | | | | 28 | 32 | 35 | 35 | 35 | 32 | 27 |
| Bleed resistance after damp heat test | | | | | | | 450 | 500 | 500 | 500 | 500 | 500 | 400 |
| Abrasion resistance | | | | | | | 500 | 500 | 500 | 500 | 500 | 500 | 500 |
| Adhesion to substrate | | | | | | | ○ | ○ | ○ | ○ | ○ | ○ | ○ |
| Adhesion to substrate after damp heat test | | | | | | | 500 | 500 | 500 | 500 | 500 | 500 | 500 |

**[Table 13]**

| | Compounds | | | Number of C=C | Number of EO | EO/C=C | Ex. 77 | Ex. 78 | Ex. 79 | Ex. 80 | Ex. 81 | Ex. 82 | Ex. 83 | Comp. Ex. 1 | Comp. Ex. 2 |
|---|---|---|---|---|---|---|---|---|---|---|---|---|---|---|---|
| Components (A) | Compounds (3) | | M3130 | 3.0 | 3.0 | 1.0 | 25 | 25 | 25 | 25 | 25 | 25 | 25 | | |
| | | | SR415 | 3.0 | 20.0 | 6.7 | | | | | | | | 100 | |
| Components (B) | Alkylbenzenesulfonate salt | | | | | | | | | | | | | 0.5 | 0.5 |
| | OT-100 | | | | | | 1 | 1 | 1 | 1 | 1 | 1 | 1 | | |
| | 12W-37 | | | | | | | | | | | | | | |
| | TM-16 | | | | | | | | | | | | | | |
| | TM-18 | | | | | | 0.05 | 0.05 | 0.05 | 0.05 | 0.05 | 0.05 | 0.05 | | |
| | 2C-75 | | | | | | | | | | | | | | |
| | DSV | | | | | | | | | | | | | | |
| | NL110 | | | | | | | | | | | | | | |
| Components (E) | TEMPTA | | | 3 | 0 | | | | | | | | | | 100 |
| | PETA | | | 4 | 0 | | | | | | | | | | |
| | DPHA | | | 5 | 0 | | 25 | 25 | 25 | 25 | 25 | 25 | 25 | | |
| | PETA | HDI | | 6 | 0 | | | | | | | | | | |
| | DPPA | HDI | | 10 | 0 | | | | | | | | | | |
| Components (F) | PETA | HDI | PEG1000 | 6 | Present | | | | | | | | | | |
| | | IPDI | PEG1000 | 6 | Present | | 50 | | | | | | | | |
| | HEA | HDI-N | PEG1000 | 4 | Present | | | 50 | | | | | | | |
| | PETA | | PEG1000 | 12 | Present | | | | 50 | | | | | | |
| | HEA | | PEG200 | 4 | Present | | | | | 50 | | | | | |
| | | | PEG600 | 4 | Present | | | | | | 50 | | | | |
| | | | PEG2000 | 4 | Present | | | | | | | 50 | | | |
| | | | PEG4000 | 4 | Present | | | | | | | | 50 | | |
| Type of substrate | | | | | | | PET | PET | PET | PET | PET | PET | PET | PET | PET |
| Initial antifogging properties | | | | | | | ⊚ | ⊚ | ⊚ | ⊚ | ⊚ | ⊚ | ⊚ | ⊚ | × |
| Antifogging durability | | | | | | | 27 | 35 | 31 | 31 | 33 | 35 | 35 | 2 | 0 |
| Bleed resistance after damp heat test | | | | | | | 400 | 500 | 450 | 450 | 500 | 500 | 450 | 25 | 25 |
| Abrasion resistance | | | | | | | 400 | 500 | 500 | 500 | 500 | 500 | 500 | 100 | 300 |
| Adhesion to substrate | | | | | | | ○ | ○ | ○ | ○ | ○ | ○ | ○ | ○ | ○ |
| Adhesion to substrate after damp heat test | | | | | | | 500 | 500 | 500 | 500 | 500 | 500 | 500 | 150 | 50 |

The abbreviations described in Tables 1 to 13 indicate the following compounds.

### [Components (A)]

·M3130: Trimethylolpropane EO-modified triacrylate (number of modification units: 3, average number of EO modification: 1), product name: "MIRAMER M3130", manufactured by Miwon Specialty Chemical Co., Ltd.
·M3160: Trimethylolpropane EO-modified triacrylate (number of modification units: 6, average number of EO modification: 2), product name: "MIRAMER M3160", manufactured by Miwon Specialty Chemical Co., Ltd.
·M3190: Trimethylolpropane EO-modified triacrylate (number of modification units: 9, average number of EO modification: 3), product name: "MIRAMER M3190", manufactured by Miwon Specialty Chemical Co., Ltd.
·M3150: Trimethylolpropane EO-modified triacrylate (number of modification units: 15, average number of EO modification: 5), product name: "MIRAMER M3150", manufactured by Miwon Specialty Chemical Co., Ltd.
·SR415:
   ·A-DPH-6E: Ethoxylated dipentaerythritol polyacrylate (average number of EO modification: 1), product name: "NK Ester A-DPH-6E", manufactured by SHIN-NAKAMURA CHEMICAL CO, LTD.
   ·A-DPH-12E: Ethoxylated dipentaerythritol polyacrylate (average number of EO modification: 2), product name: "NK Ester A-DPH-12E", manufactured by SHIN-NAKAMURA CHEMICAL CO, LTD.
   ·A-DPH-24E: Ethoxylated dipentaerythritol polyacrylate (average number of EO modification: 4), product name: "NK Ester A-DPH-24E", manufactured by SHIN-NAKAMURA CHEMICAL CO, LTD.
·DPEA42:

### [Components (B)]

·Alkylbenzenesulfonate salt: Sodium alkylbenzenesulfonate, product name: "Lipon LH-200", manufactured by LION SPECIALTY CHEMICALS CO., LTD.
·OT-100: Sodium dioctylsulfosuccinate, product name: "Aerosol OT-100", manufactured by Solvay
·12W-37: Dodecyltrimethylammonium salt, product name: "LIPOQUAD 12-37W", solid content: 37 parts by mass, manufactured by LION SPECIALTY CHEMICALS CO., LTD.
·TM-16: Cetyltrimethylammonium chloride, product name: "LEBON TM-16", solid content: 30 parts by mass, manufactured by Sanyo Chemical Industries, Ltd.
·TM-18: Stearyltrimethylammonium chloride, product name: "LEBON TM-18", solid content: 70 parts by mass, manufactured by Sanyo Chemical Industries, Ltd.
·2C-75: Dicocoyldimethylammonium chloride, product name: "LIPOQUAD 2C-75", solid content: 75 parts by mass, manufactured by LION SPECIALTY CHEMICALS CO., LTD.
·DSV: Distearyldimethylammonium chloride, product name: "CATION DSV", manufactured by Sanyo Chemical Industries, Ltd.
·NL110: Polyoxyethylene alkyl ether (HLB: 14.4), product name: "NL-110", manufactured by Sanyo Chemical Industries, Ltd.

### [Components (C)]

·AA: Acrylic acid
·HOA-MS: 2-Acryloyloxyethyl succinate, product name: "HOA-MS", manufactured by KYOEISHA CHEMICAL Co., LTD.
·ACB-3: 2-Acryloyloxyethyl hexahydrophthalate, product name: "NK Ester ACB-3", manufactured by SHIN-NAKAMURA CHEMICAL CO, LTD.

### [Components (D)]

·KBM-503: 3-Methacryloxypropyl trimethoxysilane, product name: "KBM-503", manufactured by Shin-Etsu Chemical Co., Ltd.
·KBM-5103: 3-Acryloxypropyl trimethoxysilane, product name: "KBM-5103", manufactured by Shin-Etsu Chemical Co., Ltd.
·KBM-5803: 8-Methacryloxyoctyl trimethoxysilane, product name: "KBM-5803", manufactured by Shin-Etsu Chemical Co., Ltd.

### [Components (E)]

·TEMPTA: Trimethylolpropane triacrylate, product name: "TEMPTA", manufactured by DAICEL-ALLNEX LTD.
·PETA: Pentaerythritol tetraacrylate, product name: "ARONIX M-450", manufactured by TOAGOSEI CO., LTD.
·DPHA: Dipentaerythritol hexaacrylate, product name: "KAYARAD DPHA", manufactured by Nippon Kayaku Co., Ltd.

### [Components (F)]

(F-1) to (F-8) synthesized in Synthesis Examples 1 to 8 were used.

### [Photopolymerization initiator]

Mixture containing 50% of 1-[4-(2-hydroxyethoxy)phenyl]-2-hydroxy-2-methyl-1-propan-1-one (product name: "Omnirad 2959", manufactured by IGM Resins B.V.) and 50% of bis(2,4,6-trimethylbenzoyl)phenylphosphine oxide (product name: "Omnirad 819", manufactured by IGM Resins B.V.)

### [Solvent]

### Propylene glycol monomethyl ether

The cured films of the active energy ray-curable antifogging coating compositions of the present invention were shown to have long-lasting antifogging properties and excel in abrasion resistance, bleed resistance, adhesion, and damp heat resistance.

In contrast, Comparative Example 1 in which a compound having an average number of EO modification of more than 5 was used as the component (A) resulted in significantly low bleed resistance and abrasion resistance. Furthermore, Comparative Example 2 that did not involve the component (A) resulted in poor antifogging properties, antifogging durability, bleed resistance, and adhesion to substrates.

## Claims

1. An active energy ray-curable antifogging coating composition comprising a radically polymerizable compound (A) having a structure of any of formulas (1) to (3) below, and a water-soluble surfactant (B), 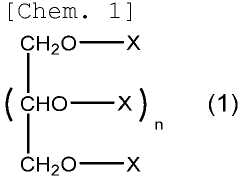 (in formula (1), n is an integer of 0 to 10; as many X as indicated by (2 + n) independently at each occurrence is an ethylene oxide-modified (meth)acryloyl group [CH₂=CR-CO(OC₂H₄)_{y}- wherein R denotes a hydrogen atom or a methyl group and y indicates the number of ethylene oxide modification], a (meth)acryloyl group [CH₂=CR-CO- wherein R denotes a hydrogen atom or a methyl group], or a hydrogen atom; at least one X is an ethylene oxide-modified (meth)acryloyl group; and the average number of ethylene oxide modification per (meth)acryloyl group in the compound is 1 to 5), 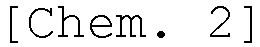 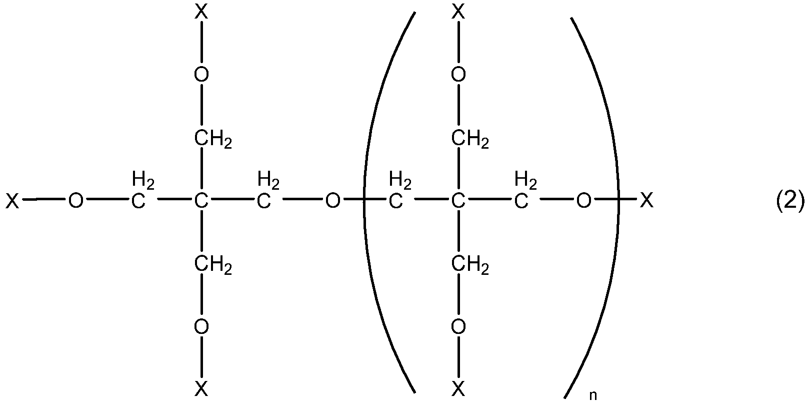 (in formula (2), n is an integer of 0 to 4; as many X as indicated by (4 + 2n) independently at each occurrence is an ethylene oxide-modified (meth)acryloyl group [CH₂=CR-CO(OC₂H₄)y- wherein R denotes a hydrogen atom or a methyl group and y indicates the number of ethylene oxide modification], a (meth)acryloyl group [CH₂=CR-CO- wherein R denotes a hydrogen atom or a methyl group], or a hydrogen atom; at least one X is an ethylene oxide-modified (meth)acryloyl group; and the average number of ethylene oxide modification per (meth)acryloyl group in the compound is 1 to 5), 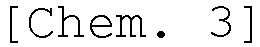 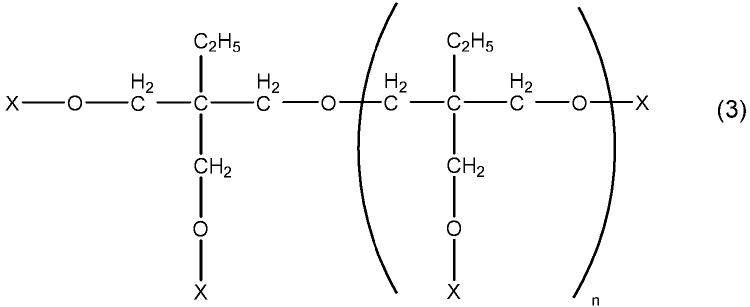 (in formula (3), n is an integer of 0 to 3; as many X as indicated by (3 + n) independently at each occurrence is an ethylene oxide-modified (meth)acryloyl group [CH₂=CR-CO(OC₂H₄)y- wherein R denotes a hydrogen atom or a methyl group and y indicates the number of ethylene oxide modification], a (meth)acryloyl group [CH₂=CR-CO- wherein R denotes a hydrogen atom or a methyl group], or a hydrogen atom; at least one X is an ethylene oxide-modified (meth)acryloyl group; and the average number of ethylene oxide modification per (meth)acryloyl group in the compound is 1 to 5).

2. The active energy ray-curable antifogging coating composition according to claim 1, further comprising a compound (C) having a carboxyl group and a (meth)acryloyl group, and a compound (D) having an alkoxylyl group and a (meth)acryloyl group.

3. The active energy ray-curable antifogging coating composition according to claim 1, further comprising a polyfunctional (meth)acrylate (E) that is not modified by ethylene oxide.

4. The active energy ray-curable antifogging coating composition according to claim 1, which comprises a polyfunctional (meth)acrylate (F) having a polyethylene glycol structure.

5. A cured product of the active energy ray-curable resin composition described in claim 1.

6. A laminate having a cured film comprising the cured product described in claim 5 on at least one side of a plastic substrate.

7. A cured product of the active energy ray-curable resin composition described in claim 2.

8. A laminate having a cured film comprising the cured product described in claim 7 on at least one side of a glass substrate.
